# EUROPÄISCHE PATENTSCHRIFT

(11) **EP 3 324 738 B1**
(45) Veröffentlichungstag und Bekanntmachung des Hinweises auf die Patenterteilung: **24.04.2019**
(21) Anmeldenummer: 16738423.9
(22) Anmeldetag: 13.07.2016
(51) Int. Cl.: A01N 25/10, A01N 25/24, A01N 43/653, A01N 43/10, A01N 37/40, A01N 57/20, C08F 220/56, C08F 283/06

(54) **AGROFORMULIERUNG MIT COPOLYMEREN ENTHALTEND HYDROXYBUTYLVINYLETHER ALS ASSOZIATIVVERDICKER**
AGROCHEMICAL FORMULATION WITH COPOLYMERS COMPRISING HYDROXYBUTYLVINYLETHER AS AN ASSOCIATIVE THICKENER
FORMULATIONS AGROCHIMIQUES AVEC COPOLYMÈRES COMPRENANT UN ÉTHER D'HYDROXYBUTYLVINYLE EN TANT QU'ÉPAISSISSANT ASSOCIATIF

(30) Priorität: 22.07.2015 EP 15177851
(43) Veröffentlichungstag der Anmeldung: 30.05.2018
(73) Patentinhaber: BASF SE, 67056 Ludwigshafen am Rhein (DE)
(72) Erfinder: BITTNER, Christian, 64625 Bensheim (DE); ZIMMERMANN, Tobias, 83278 Traunstein (DE); EISSMANN, Diana, 83342 Tacherting (DE); RANFT, Meik, 68723 Schwetzingen (DE); MORAN PUENTE, Diana Westfalia, 69226 Nussloch (DE); GUBBELS, Erik, 83303 Trostberg (DE)
(74) Vertreter: BASF IP Association
(86) Internationale Anmeldenummer: PCT/EP2016/066589
(87) Internationale Veröffentlichungsnummer: WO 2017/012930

(56) Entgegenhaltungen:
- WO-A1-01/60877
- WO-A1-03/055305
- WO-A1-2012/136613
- WO-A1-2015/086468
- US-A- 4 102 667
- US-B1- 6 214 771
- EMILIA HILZ ET AL: "Spray drift review: The extent to which a formulation can contribute to spray drift reduction", CROP PROTECTION, Bd. 44, 1. Februar 2013 (2013-02-01), Seiten 75-83, XP055212190, ISSN: 0261-2194, DOI: 10.1016/j.cropro.2012.10.020

## Beschreibung

Agroformulierung mit Copolymeren enthaltend Hydroxybutylvinylether als Assoziativverdicker.

Die vorliegende Erfindung betrifft eine agrochemische Zusammensetzung enthaltend ein Pestizid und mindestens ein wasserlösliches Copolymer (P), wobei das Copolymer (P) mindestens umfasst
(A) 30 bis 99,99 Gew.-% mindestens eines Monomers (A), ausgewählt aus der Gruppe von (Meth)acrylamid, N-Methyl(meth)acrylamid, N,N'-Dimethyl(meth)acrylamid oder N-Methylol(meth)acrylamid umfasst, sowie
(B) 0,01 bis 15 Gew.-% mindestens eines Makromonomers (B), mindestens umfassend ein Makromonomer (B1)
   (B1) H₂C=C(R¹)-R²-O-(R³O)ₐ-(R⁴O)_{b}-[(R⁴O)_{c}(R⁵O)_{d}]-H
(C) 0,1 bis 69,99 Gew.-% mindestens eines anionischen, mono-ethylenisch ungesättigten Monomers (C), umfassend mindestens eine saure Gruppe ausgewählt aus - COOH, -SO₃H, PO₃H₂ und deren Salze.
wobei die Reste und Indices die folgende Bedeutung haben:
- R¹:: H oder Methyl,
- R²:: eine Einfachbindung oder eine zweiwertige verknüpfende Gruppe -OR³⁵-, wobei R³⁵ für eine Alkylengruppe mit 1 bis 6 Kohlenstoffatomen steht,
- R³:: unabhängig voneinander Ethylengruppen -CH₂CH₂-, 1,2-Propylengruppen -CH₂-CH(CH₃)-, oder Alkylengruppen R⁴, mit der Maßgabe, dass es sich bei mindestens 90 mol% der Reste R³ um Ethylengruppen handelt,
- R⁴:: unabhängig voneinander Alkylengruppen -CR⁶(R⁷)-CR⁸(R⁹)-, wobei die Reste R⁶, R⁷, R⁸ und R⁹ unabhängig voneinander für H oder einen linearen oder verzweigten Alkylrest mit 1 bis 8 Kohlenstoffatomen stehen, mit der Maßgabe, dass nicht alle Reste für H stehen und die Summe der Kohlenstoffatome der Reste R⁶, R⁷, R⁸ und R⁹ 2 bis 8 beträgt,
- R⁵: eine Ethylengruppe -CH₂CH₂-,
- a: eine Zahl von 10 bis 150,
- b: eine Zahl von 5 bis 30,
- c: eine Zahl von 0 bis 2,
- d: eine Zahl von 0 bis 20, und
wobei die Mengenangaben der Monomere jeweils auf die Gesamtmenge aller Monomere im Copolymer (P) bezogen sind.

Einen weiteren Aspekt bildet ein Verfahren zur Herstellung einer Spritzbrühe enthaltend das Kontaktieren eines Pestizids, des wasserlöslichen Coplymers (P) und Wasser; sowie ein Verfahren zur Kontrolle phytopathogener Pilze und/oder unerwünschten Pflanzenwachstums und/oder unerwünschten Insekten- oder Milbenbefalls und/oder zur Regulation des Pflanzenwachstums, wobei man die agrochemische Zusammensetzung auf den Schädling, seine Umgebung, die vor dem Schädling zu schützende Nutzpflanze, auf den Boden und/oder die unerwünschte Pflanze und/oder die Nutzpflanze und/oder ihre Umgebung einwirken lässt.

In WO 01/60877 A1 werden wasserlösliche Copolymere zur Verminderung der Windabdrift beim Versprühen agrochemischer Formulierungen offenbart. Es besteht weiterhin Bedarf in der agrochemischen Industrie Formulierungen von Pestiziden mit verbesserten Eigenschaften zur Verfügung zu stellen. Insbesondere stellt der Windabdrift ein großes Problem hinsichtlich Pestizidverbrauch, sicherer Handhabung, Toxizität, und Resistenzbildung dar. Der Windabdrift wird durch die Tröpfchenbildung beim Sprühprozess durch Düsen beeinflusst. Die Tröpfchenbildung ist ein komplexer Prozess, der von zahlreichen Faktoren wie etwa der Dichte und der Oberflächenspannung der agrochemischen Zusammensetzung abhängt.

Die Aufgabe der vorliegenden Erfindung war es daher agrochemische Formulierungen mit verbesserten Sprüheigenschaften, v.a. vermindertem Windabdrift, darzustellen.

Es hat sich nun überraschenderweise gezeigt, dass der Zusatz von wasserlöslichen Copolymeren (P), wie oben definiert, in agrochemischen Formulierungen den Windabdrift verringert und damit die genannten Probleme löst. Die Copolymere (P) können in industriellem Maßstab produziert werden, sind ungiftig, und zeigen eine geringe Sensitivität gegenüber Elektrolyten, beispielsweise ionischen Pestiziden.

Das Copolymer (P) ist üblicherweise ein hydrophob assoziierendes Copolymer. Der Begriff "hydrophob assoziierende Copolymere" ist dem Fachmann prinzipiell bekannt. Es handelt sich hierbei um wasserlösliche Copolymere, welche neben hydrophilen Molekülteilen hydrophobe Gruppen aufweisen. In wässriger Lösung können die hydrophoben Gruppen mit sich selbst oder mit anderen, hydrophobe Gruppen aufweisenden Stoffen aufgrund zwischenmolekularer Kräfte assoziieren. Hierdurch entsteht ein durch zwischenmolekulare Kräfte geknüpftes polymeres Netzwerk, welches die viskositätserhöhende Wirkung der Copolymere verstärkt.

Die Wasserlöslichkeit des Copolymers (P) bei 25 °C und pH 7 kann bis zu 100 g/l betragen, bevorzugt bis zu 100 g/l, und besonders bevorzugt bis zu 25 g/l.

Erfindungsgemäß umfasst das wasserlösliche, hydrophob assoziierende Copolymer 30 bis 99,99 Gew.-% mindestens eines Monomers (A), bevorzugt Acrylamid sowie 0,01 bis 15 Gew.-% mindestens eines amphiphilen Makromonomers (B) umfassend -neben der monoethylenisch ungesättigten Gruppe- eine hydrophile und eine hydrophobe Gruppe. Darüber hinaus können selbstverständlich noch weitere ethylenisch ungesättigte Monomere, insbesondere monoethylenisch ungesättigte Monomere vorhanden sein.

Mittels weiterer Monomere lassen sich die Eigenschaften der Copolymere (P) modifizieren und an den gewünschten Einsatzzweck anpassen. Der Fachmann trifft hinsichtlich weiterer, ethylenisch ungesättigter Monomere je nach den gewünschten Eigenschaften des Polymers eine geeignete Auswahl.

Bei weiteren ethylenisch ungesättigten Monomeren handelt es sich um hydrophile, anionische, monoethylenisch ungesättigte Monomeren (C), umfassend mindestens eine saure Gruppe bzw. deren Salze.

### Monomere (A)

Erfindungsgemäß umfasst das Copolymer (P) mindestens ein Monomer (A), ausgewählt aus der Gruppe von (Meth)acrylamid, N-Methyl(meth)acrylamid, N,N'-Dimethyl(meth)acrylamid oder N-Methylol(meth)acrylamid. Bevorzugt handelt es sich bei dem Monomer (A) um (Meth)acrylamid, insbesondere um Acrylamid. Sofern Gemische verschiedener Monomere (A) eingesetzt werden, sollte es sich bei zumindest 50 mol% der Monomere (A) um (Meth)acrylamid, bevorzugt Acrylamid handeln.

Erfindungsgemäß beträgt die Menge der Monomere (A) 30 bis 99,99 Gew.-% bezüglich der Summe aller Monomere im Copolymer (P), bevorzugt 30 bis 99,9 Gew.-%, insbesondere 35 Gew.-% bis 99,5 Gew.-% und beispielsweise 45 bis 99,5 Gew.-%.

### Makromonomere (B)

Das Copolymer (P) umfasst mindestens ein amphiphiles, monoethylenisch ungesättigtes Makromonomer (B).

Erfindungsgemäß handelt es sich bei dem Makromonomer (B) um mindestens ein Makromonomer (B1) der allgemeinen Formel

(B1) H₂C=C(R¹)-R²-O-(R³O)ₐ-(R⁴O)_{b}-[-(R⁴O)_{c}(R⁵O)_{d}]-H.

Bevorzugt enthält das Makromonomer (B) zusätzlich mindestens ein Makromonomer (B2) der allgemeinen Formel

(B2) H₂C=C(R¹)-R²-O-(R³O)ₐ-(R⁴O)_{b}-H,

Die Reste und Indices in den Formeln (B1) und (B2) haben hierbei unabhängig voneinander die nachfolgend geschilderte Bedeutung.
R¹ steht für H oder eine Methylgruppe, bevorzugt für H.
R² steht für eine Einfachbindung oder bevorzugt eine zweiwertige verknüpfende Gruppe -OR³⁵-, wobei R³⁵ für eine lineare oder verzweigte Alkylengruppe mit 1 bis 6 Kohlenstoffatomen steht. Bevorzugt handelt es sich bei R² um eine lineare 1,ω-Alkylengruppe -(CH₂)ₖ-, bei k für 1 bis 6, bevorzugt 3 bis 6 und besonders bevorzugt für 4 steht.

Die Reste R³ stehen unabhängig voneinander Ethylengruppen -CH₂CH₂-, 1,2-Propylengruppen -CH₂CH(CH₃)- oder 1,2-Alkylengruppen R⁴, mit der Maßgabe, dass es sich bei mindestens 90 mol% der Reste R³ um Ethylengruppen handelt. Bevorzugt handelt es sich mindestens 95 mol% der Reste R³ um Ethylengruppen und ganz besonders bevorzugt handelt es sich bei den Resten R³ ausschließlich um Ethylengruppen. Bei -(R³O)ₐ- handelt es sich also um einen Block, welcher im Wesentlichen aus Ethylenoxygruppen besteht und daneben optional geringe Mengen an höheren Alkylenoxygruppen umfassen kann.

Der Index a steht für eine Zahl von 10 bis 150, bevorzugt 10 bis 35, besonders bevorzugt 15 bis 30, speziell bevorzugt 20 bis 28 und beispielsweise 23 bis 26.

Die Reste R⁴ stehen unabhängig voneinander für Alkylengruppen -CR⁶R⁷-CR⁸R⁹-, wobei die Reste R⁶, R⁷, R⁸ und R⁹ unabhängig voneinander für H oder einen linearen oder verzweigten Alkylrest mit 1 bis 8 Kohlenstoffatomen, bevorzugt 1 bis 3 Kohlenstoffatomen stehen, mit der Maßgabe, dass nicht alle Reste für H stehen und die Summe der Kohlenstoffatome der Reste R⁶, R⁷, R⁸ und R⁹ 2 bis 8, bevorzugt 2 oder 3 beträgt. Bei den Resten kann es sich beispielsweise um Methyl-, Ethyl- oder Propylreste handeln. Bei -(R⁴O)_{b}- handelt es sich also um einen Block aus Alkylenoxygruppen, welche mindestens 4 Kohlenstoffatome umfassen.

Der Index b steht für eine Zahl von 5 bis 30, insbesondere 5 bis 25, bevorzugt 7 bis 25, besonders bevorzugt 8 bis 20 und beispielsweise 8 bis 18 oder beispielsweise 12 bis 20.

R⁵ steht für eine Ethylengruppe -CH₂CH₂-.

In obiger Formel (B1) steht -[(R⁴O)_{c}(R⁵O)_{d}]- für einen Alkylenoxidblock, welcher Ethylenoxyeinheiten -R⁵O- sowie optional Alkylenoxyeinheiten -R⁴O- wie oben definiert umfasst, wobei die Einheit -R⁵O- und -R⁴O- in aller Regel statistisch angeordnet sind, aber auch blockweise oder alternierend angeordnet sein können.

Der Index c steht für eine Zahl von 0 bis 2, insbesondere 0 bis 1,5 und beispielsweise 0,1 bis 1. Der Index d steht für eine Zahl von 0 bis 20, bevorzugt 1 bis 20, besonders bevorzugt 1 bis 15, speziell von 1,5 bis 10 und in einem Beispiel 2 bis 5.

In Formel (B1) sind die Gruppen -(R³O)ₐ-, -(R⁴O)_{b}- sowie -[(R⁴O)_{c}(R⁵O)_{d}]- in der in Formel (B1) gezeigten Reihenfolge angeordnet und in Formel (B2) sind die Gruppen -(R³O)ₐ- und -(R⁴O)_{b}- in der in den Formel (B2) gezeigten Reihenfolge angeordnet.

Für den Fachmann auf dem Gebiet der Polyalkoxylate ist klar, dass bei einer Alkoxylierung eine Verteilung von Kettenlängen erhalten wird, und dass es sich bei den Indices a, b, c und d um Mittelwerte über alle Moleküle handelt. Die Indices a, b, c und d sind dementsprechend nicht natürliche Zahlen, sondern rationale Zahlen.

In einer Ausführungsform der Erfindung stehen in den Resten R⁴ jeweils 2 oder 3, bevorzugt 3 der Reste R⁶, R⁷, R⁸ und R⁹ für H. In einer Ausführungsform stehen in den Resten R⁴ jeweils 2 oder 3, bevorzugt 3 der Reste R⁶, R⁷, R⁸ und R⁹ für H, wobei die Summe der Kohlenstoffatome der Reste R⁶, R⁷, R⁸ und R⁹ jeweils 2 oder 3 beträgt.

In einer Ausführungsform der Erfindung beträgt die Summe Kohlenstoffatome der Reste R⁶, R⁷, R⁸ und R⁹ jeweils 2, wobei bei mindestens 70 mol%, bevorzugt mindestens 80 mol% und besonders bevorzugt mindestens 95 mol% der Einheiten -CR⁶R⁷CR⁸R⁹- R⁶, R⁷ und R⁸ für H und R⁹ für Ethyl stehen. In dieser Ausführungsform handelt es sich bei -R⁴O- also um Butylenoxy-gruppen, bevorzugt um Butylenoxygruppen, die sich im Wesentlichen von 1,2-Butenoxid ableiten.

In einer Ausführungsform der Erfindung beträgt die Summe der Kohlenstoffatome der Reste R⁶, R⁷, R⁸ und R⁹ jeweils 3, wobei bei mindestens 70 mol%, bevorzugt mindestens 80 mol% und besonders bevorzugt mindestens 95 mol% der Einheiten -CR⁶R⁷CR⁸R⁹- R⁶, R⁷ und R⁸ für H und R⁹ für n-Propyl stehen. In dieser Ausführungsform handelt es sich bei -R⁴O- also um Pentylenoxygruppen, besonders bevorzugt für Pentylenoxygruppen, die sich im Wesentlichen von 1,2-Pentenoxid ableiten.

Sollte eine Mischung aus (B1) und (B2) vorliegen so beträgt der molare Anteil x der Makromonomere (B1) bezüglich der Summe von (B1) und (B2) 0,1 bis 0,99, insbesondere 0,3 bis 0,99, bevorzugt 0,3 bis 0,95, besonders bevorzugt 0,45 bis 0,9, ganz besonders bevorzugt 0,5 bis 0,9 und beispielsweise 0,5 bis 0,8.

Bevorzugt sind Makromonomere (B), wobei der Rest R¹ für H, der Rest R² für OR³⁵, und der Rest R³ für CH₂CH₂ stehen, besonders bevorzugt wobei der Rest R¹ für H, der Rest R² für OR³⁵, und der Rest R³ für CH₂CH₂, und der Rest R³⁵ für eine Gruppe -CH₂CH₂- stehen.

Bevorzugt sind weiterhin Makromonomere (B), wobei die Indices a eine Zahl von 10 bis 35, der Index b eine Zahl von 5 bis 30, und der Index d eine Zahl von 2 bis 5 sind.

Besonders bevorzugt sind weiterhin Makromonomere (B), wobei die Indices a eine Zahl von 10 bis 35, der Index b eine Zahl von 7 bis 25, und der Index d eine Zahl von 2 bis 5 sind. Bevorzugt sind weiterhin Makromonomere (B), wobei die Indices a eine Zahl von 20 bis 28, der Index b eine Zahl von 8 bis 20, und der Index d eine Zahl von 2 bis 5 sind.

Besonders bevorzugt sind weiterhin Makromonomere (B), wobei die Indices a eine Zahl von 23 bis 26, der Index b eine Zahl von 12 bis 20, und der Index d eine Zahl von 2 bis 5 sind.

In einer bevorzugten Ausführungsform der Erfindung wird die Summe b+c der vorhandenen Reste R⁴O mit der Maßgabe gewählt, dass die Summe aller Kohlenstoffatome in allen vorhandenen Resten R⁶, R⁷, R⁸ und R⁹ zusammen 25 bis 50, bevorzugt 28 bis 46 beträgt Mit anderen Worten gesagt, ist bei dieser Ausführungsform die Summe der Reste R⁴O umso geringer, je mehr Kohlenstoffatome die Alkylenoxyeinheiten R⁴O umfassen.

In einer weiteren Ausführungsform der Erfindung stehen in R⁴ 2 oder 3, bevorzugt 3 der Reste R⁶, R⁷, R⁸ und R⁹ für H, wobei die Summe der Kohlenstoffatome der Reste R⁶, R⁷, R⁸ und R⁹ 2 oder 3, wobei die Summe b+c der vorhandenen Reste R⁴O mit der Maßgabe gewählt wird, dass die Summe aller Kohlenstoffatome in allen vorhandenen Resten R⁶, R⁷, R⁸ und R⁹ zusammen 25 bis 50, bevorzugt 28 bis 46 beträgt.

In einer bevorzugten Ausführungsform der Erfindung handelt es sich bei den Makromonomeren (B) um Makromonomere (B1) oder einer Mischung aus (B1) und (B2), bei denen R³ für Ethylengruppen steht und die Summe der Kohlenstoffatome der Reste R⁶, R⁷, R⁸ und R⁹ 2 beträgt, wobei bei mindestens 70 mol%, bevorzugt mindestens 80 mol% und besonders bevorzugt mindestens 95 mol% der Einheiten -CR⁶R⁷CR⁸R⁹- R⁶, R⁷ und R⁸ für H und R⁹ für Ethyl stehen. Mit anderen Worten gesagt handelt es sich bei den Resten R⁴ um Butylengruppen. Weiterhin steht a für eine Zahl von 20 bis 28, bevorzugt 23 bis 26, b für eine Zahl von 10 bis 25, bevorzugt 14 bis 23, besonders bevorzugt 14 bis 20, ganz besonders bevorzugt 14 bis 18, c für 0 bis 1,5 bevorzugt 0,5 bis 1,5, d für eine Zahl von 1,5 bis 10, bevorzugt 1,5 bis 5. Der molare Anteil x der Makromonomere (B1) beträgt bei dieser Ausführungsform insbesondere 0,3 bis 0,95, bevorzugt 0,45 bis 0,9 bezüglich der Summe der Monomere (B1) und (B2) zusammen.

In einer weiteren Ausführungsform der Erfindung handelt es sich bei den Makromonomeren (B) um Makromonomere (B1) oder einer Mischung aus (B1) und (B2), bei denen R³ für Ethylengruppen steht, die Summe der Kohlenstoffatome der Reste R⁶, R⁷, R⁸ und R⁹ 3 beträgt, wobei bei mindestens 70 mol%, bevorzugt mindestens 80 mol% und besonders bevorzugt mindestens 95 mol% der Einheiten -CR⁶R⁷CR⁸R⁹- R⁶, R⁷ und R⁸ für H und R⁹ für *n*-Propyl stehen. Mit anderen Worten gesagt handelt es sich bei den Resten R⁴ um Pentylengruppen. Weiterhin steht a für eine Zahl von 20 bis 28, bevorzugt 23 bis 26, b für eine Zahl von 5 bis 16, bevorzugt 8 bis 12, c für 0 bis 1,5 bevorzugt 0,5 bis 1,5, d für eine Zahl von 1,5 bis 10, bevorzugt 1,5 bis 5. Der molare Anteil x der Makromonomere (B1) beträgt bei dieser Ausführungsform insbesondere 0,3 bis 0,95, bevorzugt 0,45 bis 0,9 bezüglich der Summe der Monomere (B1) und (B2) zusammen.

Neben den Makromonomeren (B1) oder einer Mischung aus (B1) und (B2) können selbstverständlich noch weitere, davon verschiedene amphiphile, hydrophobe und hydrophile Gruppen umfassende Makromonomere vorhanden sein. Derartige Makromonomere sind dem Fachmann prinzipiell bekannt. Es kann sich dabei insbesondere um Derivate von Acrylamid, Acrylsäure, Maleinsäure, Vinyl- oder Allyleinheiten handeln. Beispiele umfassen insbesondere Makromonomere auf Basis von (Meth)acrylsäure der allgemeinen Formel H₂C=C(R¹⁸)-C¹⁸-(CH₂CH₂O)ₗ-R¹⁹, wobei R¹⁸ für H oder Methyl, I für eine Zahl von 5 bis 50 und R¹⁹ für eine Kohlenwasserstoffgruppe mit 8 bis 36 Kohlenstoffatomen steht. Weitere Beispiele umfassen kationische Monomere der allgemeinen Formel H₂C=C(R¹⁸)-CO-NH-R³⁶-N⁺(CH₃)₂R³⁷ X⁻, wobei R³⁶ für eine Alkylengruppe mit 2 bis 6 Kohlenstoffatomen, bevorzugt eine 1,ω-Alkylengruppe mit 2 bis 6 Kohlenstoffatomen, R³⁷ für eine Kohlenwasserstoffgruppe mit 8 bis 30 Kohlenstoffatomen und X⁻ für ein Anion steht.

Falls neben den Makromonomeren (B1) und (B2) noch weitere Makromonomere (B) vorhanden sind, sollte der Anteil an (B1) und (B2) mindestens 50 Gew.-% bezüglich der Summe aller eingesetzten Makromonomere betragen, bevorzugt mindestens 80 Gew.-%. Besonders bevorzugt sind ausschließlich Makromonomere (B1) und (B2) vorhanden.

In einem Beispiel enthält das Copolymer (P) ein Makromonomer (B1) und/oder (B2), wobei R¹ für H, R² für -(CH₂)₄-, R³ für Ethylen steht, und die Indices a für Zahlen von 10 bis 150, b von 5 bis 30, d von 1 bis 20 stehen, und c gleich 0 ist.

In einem weiteren Beispiel enthält das Copolymer (P) ein Makromonomer (B1) oder einer Mischung aus (B1) und (B2), wobei R¹ für H, R² für -(CH₂)₄-, R³ für Ethylen steht, und die Indices a für Zahlen von 10 bis 35, b von 8 bis 20, d von 1 bis 15 stehen, und c gleich 0 ist.

In einem weiteren Beispiel enthält das Copolymer (P) ein Makromonomer (B1) oder einer Mischung aus (B1) und (B2), wobei R¹ für H, R² für -(CH₂)₄-, R³ für Ethylen steht, die Summe der Kohlenstoffe der Reste R⁶, R⁷, R⁸, und R⁹ 2 oder 3 beträgt, die Indices a für Zahlen von 10 bis 35, b von 8 bis 20, d von 1 bis 15 stehen, und c gleich 0 ist.

In einem weiteren Beispiel enthält das Copolymer (P) ein Makromonomer (B1) oder einer Mischung aus (B1) und (B2), wobei R¹ für H, R² für -(CH₂)₄-, R³ für Ethylen steht, die Summe der Kohlenstoffe der Reste R⁶, R⁷, R⁸, und R⁹ 2 oder 3 beträgt, die Indices a für Zahlen von 10 bis 35, b von 8 bis 20, d von 1 bis 15 stehen, und c gleich 0 ist.

In einem weiteren Beispiel enthält das Copolymer (P) ein Makromonomer (B1) oder einer Mischung aus (B1) und (B2), wobei R¹ für H, R² für -(CH₂)₄-, R³ für Ethylen steht, die Summe der Kohlenstoffe der Reste R⁶, R⁷, R⁸, und R⁹ 2 oder 3 beträgt, die Indices a für Zahlen von 23 bis 26, b von 12 bis 20, d von 2 bis 5 stehen, und c gleich 0 ist.

In einem weiteren Beispiel enthält das Copolymer (P) ein Makromonomer (B1) oder einer Mischung aus (B1) und (B2), wobei R¹ für H, R² für -(CH₂)₄-, R³ für Ethylen steht, die Summe der Kohlenstoffe der Reste R⁶, R⁷, R⁸, und R⁹ 2 oder 3 beträgt, die Indices a für Zahlen von 10 bis 150, b von 5 bis 25, d von 0 bis 20 stehen, und c gleich 0 ist.

Erfindungsgemäß beträgt die Menge der Makromonomere (B), bevorzugt die Gesamtmenge von (B1) und (B2) 0,01 bis 15 Gew.-% bezüglich der Summe aller Monomere im Copolymer (P), bevorzugt 0,1 bis 10 Gew.-%, besonders bevorzugt 0,5 bis 8 Gew.-%, ganz besonders bevorzugt 0,8 bis 5 Gew.-% und beispielsweise 1 bis 2,5 Gew.-%.

Die Herstellung der Makromonomere (B1) und (B2) kann nach den Vorschriften aus PCT/EP2014/076772 erfolgen.

### Monomere (C)

Neben den Monomeren (A) und (B) enthält das Copolymer (P) mindestens ein anionisches monoethylenisch ungesättigtes Monomer (C), umfassend mindestens eine saure Gruppe ausgewählt aus -COOH, -SO₃H, PO₃H₂ und deren Salze.

Beispiele für COOH-Gruppen umfassender Monomere umfassen Acrylsäure, Methacrylsäure, Crotonsäure, Itaconsäure, Maleinsäure oder Fumarsäure. Bevorzugt ist Acrylsäure.

Beispiele für Sulfonsäuregruppen umfassender Monomere umfassen Vinylsulfonsäure, Allylsulfonsäure, 2-Acrylamido-2-methylpropansulfonsäure, 2-Methacrylamido-2-methylpropansulfonsäure, 2-Acrylamidobutansulfonsäure, 3-Acrylamido-3-methyl-butansulfonsäure oder 2-Acrylamido-2,4,4-trimethylpentansulfonsäure. Bevorzugt sind Vinylsulfonsäure, Allylsulfonsäure oder 2-Acrylamido-2-methylpropansulfonsäure und besonders bevorzugt ist oder 2-Acrylamido-2-methylpropansulfonsäure.

Beispiele für Phosphonsäuregruppen umfassender Monomere umfassen Vinylphosphonsäure, Allylphosphonsäure, N-(Meth)acrylamidoalkylphosphonsäuren oder (Meth)acryloyloxyalkylphosphonsäuren, bevorzugt ist Vinylphosphonsäure.

Bei der sauren Gruppe handelt es sich bevorzugt um mindestens eine saure Gruppe ausgewählt aus COOH-Gruppen und/oder -SO₃H-Gruppen.

Die sauren Gruppen können selbstverständlich ganz oder teilweise neutralisiert sein, d.h. sie können als Salze vorliegen. Geeignete Gegenionen für die saure Gruppe umfassen insbesondere Alkalimetallionen wie Li⁺, Na⁺ oder K⁺ sowie Ammoniumionen NH₄⁺ und Ammoniumionen mit organischen Resten.

Beispiele von Ammoniumionen mit organischen Resten umfassen Ammoniumionen der allgemeinen Formel [NHR²⁰R²¹R²²]⁺ (VI), wobei die Reste R²⁰, R²¹ und R²² unabhängig voneinander für H oder aliphatische und/oder aromatische Kohlenwasserstoffreste mit 1 bis 12, bevorzugt 1 bis 6 Kohlenstoffatomen stehen, wobei die Kohlenwasserstoffreste mit OH-Gruppen substituiert sein können und/oder nicht benachbarte Kohlenstoffatome durch O oder N substituiert sein können, mit der Maßgabe, dass zumindest einer der Reste R²⁰, R²¹ und R²² nicht für H steht. Weiterhin kann es sich um Ammoniumionen der allgemeinen Formel [R²⁰R²¹HN-R²³-NHR²⁰R²¹]²⁺ (VII) handeln, wobei R²⁰ und R²¹ die oben geschilderte Bedeutung haben und R²³ für einen Alkylenrest mit 1 bis 6 Kohlenstoffatomen, bevorzugt einen 1,ω-Alkylenrest mit 2 bis 6 Kohlenstoffatomen steht. Beispiele von Ammoniumionen mit organischen Resten umfassen [NH(CH₃)₃]⁺, [NH₂(CH₃)₂]⁺, [NH₃(CH₃)]⁺, [NH(C₂H₅)₃]⁺, [NH₂(C₂H₅)₂]⁺, [NH₃(C₂H₅)]⁺, [NH₃(CH₂CH₂OH)]⁺, [H₃N-CH₂CH₂-NH₃]²⁺ oder [H(H₃C)₂N-CH₂CH₂CH₂NH₃]²⁺.

Bevorzugte Gegenionen sind Li⁺, Na⁺ oder K⁺, oder NH₄⁺, besonders Na⁺ oder NH₄⁺, speziell NH₄⁺. Mischungen von Gegenionen sind ebenfalls von der vorstehenden Auflistung umfasst.

Salze können erhalten werden, indem man Monomere (C) in der Säureform vor der Polymerisation mit den entsprechenden Basen ganz oder teilweise neutralisiert. Selbstverständlich kann man Monomere (C) auch in der Säureform zur Polymerisation einsetzen und Säuregruppen im erhaltenen Copolymer (P) nach der Polymerisation ganz oder teilweise neutralisieren.

Die Menge der Monomere (C) beträgt 0,1 bis 69,99 Gew.-%, insbesondere 5 bis 64,9 Gew.-% bezüglich der Summe aller Monomere des Copolymers (P).

Ein bevorzugtes Monomer (C) entspricht Formel (I)

CH₂=CH₂-C(O)XR⁵SO₃H (I),

wobei
- X: N oder O; und
- R⁵: CH₂, CH₂CH₂, C(CH₃)₂, CH(CH₃), CH(CH₃)CH₂, CH₂CH(CH₃), C(CH₃)₂CH₂, CH₂C(CH₃)₂.

Bevorzugte Reste R⁵ sind CH₂CH₂, CH(CH₃)CH₂, CH₂CH(CH₃), C(CH₃)₂CH₂, oder CH₂C(CH₃)₂, besonders bevorzugt C(CH₃)₂CH₂, oder CH₂C(CH₃)₂, im Speziellen C(CH₃)₂CH₂.

In einer Ausführungsform der Formel (I) ist der Rest X gleich N, und R¹⁰ ist CH₂CH₂, CH(CH₃)CH₂, CH₂CH(CH₃), C(CH₃)₂CH₂, oder CH₂C(CH₃)₂, besonders bevorzugt C(CH₃)₂CH₂, oder CH₂C(CH₃)₂, speziell C(CH₃)₂CH₂.

In einer weiteren Ausführungsform der Formel (I) ist der Rest X gleich O, und R¹⁰ ist CH₂CH₂, CH(CH₃)CH₂, CH₂CH(CH₃), C(CH₃)₂CH₂, oder CH₂C(CH₃)₂, besonders bevorzugt C(CH₃)₂CH₂, oder CH₂C(CH₃)₂, speziell C(CH₃)₂CH₂.

In einer bevorzugten Ausführungsform enthält das Copolymer (P) mindestens zwei verschiedene Monomere (C), bevorzugt mindesten ein Monomer (C) enthaltend eine Gruppe -COOH und mindestens ein Monomer enthaltend eine Gruppe -SO₃H, besonders bevorzugt (Meth)acrylsäure und ein Monomer der Formel (I).

In einer weiteren Ausführungsform enthält das Copolymer (P) mindestens ein Monomer (C) mit einer Gruppe -COOH, bevorzugt Acrylsäure und Methacrylsäure, besonders bevorzugt Acrylsäure.

### Monomere (D)

Die Copolymere (P) können darüber hinaus noch weitere, von den Monomeren (A), (B), und (C) verschiedene monoethylenisch ungesättigte Monomere (D) enthalten.

Besonders bevorzugt sind optional eingesetzte Monomere (D) in beliebigem Verhältnis mit Wasser mischbar. Im Regelfalle sollte die Löslichkeit der Monomere (D) in Wasser bei Raumtemperatur mindestens 25 g/l, bevorzugt mindestens 50 g/l und besonders bevorzugt mindestens 100 g/l betragen.

Beispiele für Monomere (D) umfassen Hydroxy- und/oder Ethergruppen umfassende Monomere, wie beispielsweise Hydroxyethyl(meth)acrylat, Hydroxypropyl(meth)acrylat, Allylalkohol, Hydroxyvinylethylether, Hydroxyvinylpropylether, Hydroxyvinylbutylether oder Verbindungen der Formel H₂C=C(R¹⁵)-COO-(-CH₂-CH(R¹⁶)-O-)_{b}-R¹⁷ (X) bzw. H₂C=C(R¹⁵)-O-(-CH₂-CH(R¹⁶)-O-)_{b}-R¹⁷ (XI) wobei R¹⁵ für H oder Methyl steht und b für eine Zahl von 2 bis 200, bevorzugt 2 bis 100 steht. Bei den Resten R¹⁶ handelt es sich unabhängig voneinander um H, Methyl oder Ethyl, bevorzugt H oder Methyl, mit der Maßgabe, dass es sich bei mindestens 50 mol% der Reste R¹³ um H handelt. Bevorzugt handelt es sich bei mindestens 75 mol% der Reste R¹⁶ um H, besonders bevorzugt bei mindestens 90 mol% und ganz besonders bevorzugt ausschließlich um H. Bei dem Rest R¹⁷ handelt es sich um H, Methyl oder Ethyl, bevorzugt H oder Methyl. Weitere Beispiele von Monomeren (D) umfassen N-Vinylderivate wie beispielsweise N-Vinylformamid, N-Vinylacetamid, N-Vinylpyrrolidon oder N-Vinylcaprolactam sowie Vinylester, wie beispielsweise Vinylformiat oder Vinylacetat. N-Vinylderivate können nach Polymerisation zu Vinylamin-Einheiten, Vinylester zu Vinylalkohol-Einheiten hydrolysiert werden. Bevorzugtes Monomere (D) sind N-Vinylpyrrolidon oder N-Vinylcaprolactam sowie Vinylester, wie beispielsweise Vinylformiat oder Vinylacetat, besonders N-Vinylpyrrolidon oder N-Vinylcaprolactam, speziell N-Vinylpyrrolidon. In einer Ausführungsform enthält das Copolymer (P) ein Monomer (D), bevorzugt N-Vinylpyrrolidon. In einer anderen Ausführungsform enthält das Copolymer (P) kein Monomer (D).

Sofern überhaupt vorhanden, sollte die Menge der Monomere (D) 15 Gew.-%, bevorzugt 10 Gew.-%, besonders bevorzugt 5 Gew.-% bezüglich der Summe aller Monomere nicht übersteigen und ganz besonders bevorzugt sind keine Monomere (D) vorhanden.

In einer weiteren Ausführungsform enthalten Copolymere (P) 0,1 bis 30 Gew.-% an Monomeren (D), bevorzugt 1 bis 20 Gew.-%, besonders bevorzugt 1 bis 10 Gew.-%.

### Monomere (E)

Die Copolymere (P) können darüber hinaus noch weitere, von den Monomeren (A), (B), (C) und (D) verschiedene polyethylenisch ungesättigte Monomere (E) enthalten.

Beispiele für Monomere (E) sind N,N-Methylenbisacrylamid, N,N-Methylenbismethacrylamid, Triallylamin, Triallylammoniumsalze, Tetraallylammoniumsalze, Ethylenglycoldimethacrylat, Diethylen glycoldimethacrylat, Polyethyleneglycoldiacrylat, Triethylenglycoldimethylacrylat, Polyethylenglycol dimethacrylat, N-Vinylacrylamid, N-Methylallylacrylamide, sowie die Polyester von Polyolen mit Acrylsäure und/oder Methacrylsäure, beispielsweise Trimethylolpropantriacrylat und -methacrylat, Pentaerythrittriallylether, Pentaerythrittetraallylether, Pentaerythrittriacrylat und Pentaerythrittetraacrylat sowie ihre technischen Mischungen.

Bevorzugt werden Trimethylolpropantriacrylat und -methacrylat, Pentaerythrittriallylether, Pentaerythrittetraallylether, Pentaerythrittriacrylat und Pentaerythrittetraacrylat sowie ihre technischen Mischungen, und Tetraallylammoniumsalze, etwa Tatraallylammoniumchlorid. In einer Ausführungsform sind Tetraallylammoniumsalze, bevorzugt Tetraallylammoniumchlorid bevorzugte Monomere (E).

Die Menge der Monomere (E) in den Copolymeren (P) liegt üblicher Weise bei 0,001 bis 20 Gew.-%, bevorzugt 0,001 bis 5 Gew.-%, besonders bevorzugt 0,001 bis 1 Gew.-%, speziell 0,001 bis 0,1 Gew.-%. In einer Ausführungsform enthalten die Copolymere (P) keine Monomere (E).

### Herstellung der Copolymere (P)

Die erfindungsgemäßen Copolymere können nach dem Fachmann prinzipiell bekannten Methoden durch radikalische Polymerisation der Monomere (A), (B), (C) sowie optional (D) und /oder (E) in wässriger Lösung hergestellt werden, beispielsweise mittels Lösungspolymerisation, Gelpolymerisation oder inverser Emulsionspolymerisation. Die genannten Polymerisationstechniken sind dem Fachmann prinzipiell bekannt.

Zur Polymerisation können wässrige Lösungen oder der Monomere zusammen mit geeigneten Initiatoren für die radikalische Polymerisation eingesetzt und polymerisiert werden. Die Polymerisation kann thermisch und/oder fotochemisch erfolgen. Selbstverständlich können zur Polymerisation noch weitere Additive und Hilfsmittel, beispielsweise Entschäumer oder Komplexbildner eingesetzt werden.

In einer bevorzugten Ausführungsform der Erfindung werden die verwendeten Copolymere in Gegenwart mindestens einer nicht-polymerisierbaren, oberflächenaktiven Verbindung (T) hergestellt. Bei der nicht polymerisierbaren, oberflächenaktiven Verbindung (T) handelt es sich vorzugsweise um mindestens ein nicht-ionisches Tensid, aber auch anionische und kationische Tenside sind geeignet, sofern sie an der Polymerisationsreaktion nicht teilnehmen. Es kann sich insbesondere um Tenside, bevorzugt nichtionische Tenside der allgemeinen Formel R¹⁸-Y handeln, wobei R¹⁸ für einen Kohlenwasserstoffrest mit 8 bis 32, bevorzugt 10 bis 20 und besonders bevorzugt 12 bis 18 Kohlenstoffatomen steht und Y für eine hydrophile Gruppe, bevorzugt eine nichtionische hydrophile Gruppe, insbesondere eine Polyalkoxygruppe.

Bei dem nicht-ionischen Tensid handelt es sich bevorzugt um einen ethoxylierten langkettigen, aliphatischen Alkohol, welcher optional aromatische Anteile enthalten kann.

Exemplarisch seinen genannt: C₁₂C₁₄-Fettalkoholethoxylate, C₁₆C₁₈-Fettalkoholethoxylate, C₁₃-Oxoalkoholethoxylate, C₁₀-Oxoalkoholethoxylate, C₁₃C₁₅-Oxoalkoholethoxylate, C₁₀-Guerbetalkoholethoxylate und Alkylphenolethoxylate. Bewährt haben sich insbesondere Verbindungen mit 5 bis 20 Ethylenoxyeinheiten, bevorzugt 8 bis 18 Ethylenoxyeinheiten. Optional können auch noch geringe Mengen von höheren Alkylenoxyeinheiten, insbesondere Propylenoxy- und/oder Butylenoxyeinheiten vorhanden sein, wobei die Menge als Ethylenoxyeinheiten aber in der Regel mindestens 80 mol% bezüglich aller Alkylenoxyeinheiten betragen sollte.

Geeignet sind insbesondere Tenside ausgewählt aus der Gruppe ethoxylierter Alkylphenole, ethoxylierter, gesättigter iso-C₁₃-Alkohole und/oder ethoxylierter C₁₀-Guerbetalkohole, wobei jeweils 5 bis 20 Ethylenoxyeinheiten, bevorzugt 8 bis 18 Ethylenoxyeinheiten in Alkylenoxy-resten vorhanden sind.

Der Zusatz nicht polymerisierbarer, grenzflächenaktiver Verbindungen (T) während der Polymerisation führt zu einer deutlichen Verbesserung anwendungstechnischer Eigenschaften des Copolymers (P) beim Polymerfluten. Insbesondere wird die Verdickungswirkung erhöht und außerdem reduziert sich der Gelanteil des Copolymers. Dieser Effekt lässt sich vermutlich folgendermaßen erklären, ohne dass die Erfindung damit auf diese Erklärung festgelegt sein soll. Bei der Polymerisation ohne Anwesenheit eines Tensids bilden die Makromonomere (B) in dem wässrigen Reaktionsmedium Mizellen. Bei der Polymerisation führt dies dazu, dass die hydrophob assoziierenden Bereiche blockweise in das Polymer eingebaut werden. Ist nun bei der Herstellung der Copolymere eine zusätzliche oberflächenaktive Verbindung anwesend, bilden sich gemischte Mizellen. Diese gemischten Mizellen enthalten polymerisierbare und nicht polymerisierbare Anteile. Dadurch werden dann die Makromonomere (B) in kürzeren Blöcken eingebaut. Gleichzeitig ist die Anzahl dieser kürzeren Blöcke pro Polymerkette größer. Somit unterscheidet sich der Aufbau der in Gegenwart eines Tensids hergestellten Copolymere von denen ohne Anwesenheit eines Tensids.

Die nicht polymerisierbaren, grenzflächenaktiven Verbindungen (T) können im Regelfalle in einer Menge von 0,1 bis 5 Gew.-% bezüglich der Menge aller eingesetzten Monomere eingesetzt werden. Das Gewichtsverhältnis der eingesetzten, nicht polymerisierbaren, grenzflächenaktiven Verbindungen (T) zu den Monomeren (B) beträgt in der Regel 4:1 bis 1:4, bevorzugt 2:1 bis 1:2, besonders bevorzugt 1,5 : 1 bis 1:1,5 und beispielsweise ca. 1:1.

In einer Ausführungsform können die Copolymere (P) durch Lösungspolymerisation gewonnen werden.

Zur Lösungspolymerisation wird zunächst eine Lösung umfassend die Monomere (A), (B), (C), sowie optional (D) und/oder (E), sowie Wasser oder ein wässriges Lösemittelgemisch bereitgestellt. Geeignete wässrige Lösemittelgemische umfassen Wasser sowie mit Wasser mischbare organische Lösemittel, wobei der Anteil von Wasser im Regelfalle mindestens 50 Gew.-%, bevorzugt mindestens 60 Gew.-% und besonders bevorzugt mindestens 70 Gew.-% beträgt. In einer Ausführungsform der Erfindung wird ausschließlich Wasser als Lösemittel verwendet. Zu nennen als mit Wasser mischbare organische Lösemittel sind insbesondere Alkohole wie Methanol, Ethanol oder Propanol. Die Konzentration aller Monomere zusammen beträgt üblicherweise 1 bis 40 Gew.-%, bevorzugt 5 bis 30 Gew.-%, beispielsweise 10 bis 20 Gew.-% bezüglich der wässrigen Monomerlösung.

Saure Monomere können vor der Polymerisation ganz oder teilweise neutralisiert werden. Dies kann beispielsweise mit Alkalimetallhydroxiden erfolgen oder auch mit Ammoniak oder Aminen. Die Polymerisation sollte insbesondere bei einem pH-Wert im Bereich von 5 bis 7,5, bevorzugt 5 bis 7 und beispielsweise bei einem pH-Wert von 6 durchgeführt werden. Die wässrige Monomerlösung kann weiterhin verschiedene Additive umfassen, beispielsweise Entschäumer oder Komplexbildner.

Zur Durchführung der Lösungspolymerisation kann zunächst Wasser oder eine wässrige Lösung von geeigneten Zusatzstoffen, etwa Tensiden, Entschäumern, oder Komplexbildner, vorgelegt werden. Der pH wird daraufhin auf einen Bereich von 4 bis 7, bevorzugt 5 bis 7, besonders bevorzugt 5,5 bis 6,5 mit geeigneten Säuren und Basen eingestellt.

Geeignete Säuren sind in der Regel organische Säuren, etwa C₁-C₆-Karbonsäuren wie CH₃COOH, HCOOH, oder CH₃CH₂COOH, oder Mineralsäuren, etwa H₂SO₄, HCl, oder HNO₃. Geeignete Basen sind in der Regel anorganische Verbindungen, wie Alkali- oder Erdalkalihydroxide, wie etwa LiOH, NaOH, KOH, oder Ca(OH)₂; Alkali- oder Erdalkalimetalloxide, wie etwa Li₂O, Na₂O, CaO, oder MgO; Alkali- oder Erdalkalikarbonate, wie Li₂CO₃, Na₂CO₃, K₂CO₃, oder CaCO₃; Alkali- oder Erdalkalibikarbonate, wie NaHCO₃; oder organische Basen, beispielsweise tertiäre Amine, wie etwa Trimethylamin, Triethylamin, Triisopropylethylamin, und N-Methylpiperidin, Pyridin, substituierte Pyridine, wie etwa Collidin, Lutidin, und 4-Dimethylaminopyridin, sowie bizyklische Amine.

Nach Zugabe der Monomere erwärmt man die wässrige Monomerlösung üblicher Weise auf eine Temperatur von 50 bis 85 °C, bevorzugt 55 bis 80 °C. Zum Polymerisieren wird die Monomerlösung in der Regel inertisiert, d.h. von eventuell vorhandenem Sauerstoff befreit. Dies kann beispielsweise durch Spülen der Monomerlösung mit einem Inertgas wie Stickstoff, Argon oder Kohlendioxid erfolgen. Dieses Spülen kann bereits während des Mischens und Kühlens der wässrigen Monomerlösung erfolgen, in einer separaten Vorrichtung zum Inertisieren, beispielsweise der in WO 03/066190 A1 beschriebenen Vorrichtung oder auch im Reaktor selbst. Bevorzugt erfolgt das Inertisieren vor dem Reaktor.

Nach dem Abkühlen gibt man mindestens einen, in der Monomerlösung löslichen Initiator für die radikalische Polymerisation zu. Die Initiatoren können bevorzugt wasserlöslich sein, in der Monomerlösung sind aber auch Initiatoren löslich, welche nicht mehr gut wasserlöslich sind. Es kann sich sowohl um thermische Initiatoren sowie um Fotoinitiatoren handeln. Bevorzugt werden thermische Initiatoren verwendet.

Beispiele für thermische Initiatoren sind Azoisobutyronitril, Dibenzoylperoxid, 2,2'-Azobis(2-methylpropionamidine)dihydrochloride, oder Natriumperoxidsulfat, oder Mischungen davon. Bei der Verwendung von thermischen Initiatoren werden häufig Katalysatoren zugegeben, beispielsweise organische Amine, so wie tetramethylethylenediamine, oder Tetraethylenpentamin, oder Mischungen davon. In einer Ausführungsform wird der Initiator nur zu Beginn der Polymerisation zugegeben. In einer weiteren Ausführungsform wird der Initiator sowohl zu Beginn der Polymerisation zugegeben, als auch mindestens ein weiteres Mal, bevorzugt ein Mal, während der Polymerisationsreaktion.

Die durch Lösungspolymerisation erhaltenen Copolymere (P) weisen in der Regel ein gewichtsmittleres Molekulargewicht M_{w} von 50000 g/mol bis 800000 g/mol, bevorzugt 100000 g/mol bis 600000 g/mol und im Besonderen 100000 g/mol bis 500000 g/mol.

Meist weist das durch Lösungspolymerisation erhaltene Copolymer (P) ein gewichtsmittleres Molekulargewicht M_{w} von mindestens 150000 g/mol, bevorzugt mindestens 200000 g/mol, besonders bevorzugt 300000 g/mol auf.

In einer bevorzugten Ausführungsform wird die radikalische Polymerisation mittels Gelpolymerisation, bevorzugt adiabatischer Gelpolymerisation in wässriger Phase vorgenommen.

Da die Gelpolymerisation lediglich einen Spezialfall der Lösungspolymerisation bildet, wird die die Gelpolymerisation durch die Lösungspolymerisation umfasst. Folgende Merkmale kennzeichnen die Gelpolymerisation im Besonderen.

Die Konzentration aller Monomere zusammen beträgt üblicherweise 10 bis 60 Gew.-%, bevorzugt 20 bis 50 Gew.-%, beispielsweise 25 bis 45 Gew.-% bezüglich der wässrigen Monomerlösung. Durch die Polymerisation wird ein im Regelfalle festes Polymergel erhalten.

Die Gelpolymerisation erfolgt in aller Regel ohne Rühren. Sie kann bevorzugt batchweise erfolgen, beispielsweise in einem Rohreaktor wie von GB 1,054,028 beschrieben. Besonders vorteilhaft können hierzu konische Reaktoren verwendet werden, wie beispielsweise von US 5,633,329 oder US 7,619,046 B2 beschrieben.

Das erhaltene Polymergel wird vorzugsweise zerkleinert und getrocknet. Die Trocknung sollte bevorzugt bei Temperaturen unterhalb von 100 °C erfolgen. Zum Vermeiden des Zusammenklebens kann man für diesen Schritt ein geeignetes Trennmittel verwenden. Man erhält das hydrophob assoziierende Copolymer als Granulat oder Pulver.

Da das erhaltene Polymerpulver bzw. -granulat im Zuge der Anwendung am Einsatzort in der Regel als wässrige Lösung eingesetzt wird, muss das Polymer vor Ort in Wasser aufgelöst werden. Dabei kann es mit den beschriebenen, hochmolekularen Polymeren zu unerwünschten Verklumpungen kommen. Um dies zu vermeiden, kann den erfindungsgemäßen Polymeren bereits bei der Synthese ein Hilfsmittel, welches die Auflösung des getrockneten Polymers in Wasser beschleunigt bzw. verbessert, zugesetzt werden. Bei diesem Hilfsmittel kann es sich beispielsweise um Harnstoff handeln.

Die durch Gelpolymerisation erhaltenen Copolymere (P) weisen in der Regel ein gewichtsmittleres Molekulargewicht M_{w} von 1*10⁶ g/mol bis 30*10⁶ g/mol, bevorzugt 6*10⁶ g/mol bis 25*10⁶ g/mol und beispielsweise 8*10⁶ g/mol bis 20*10⁶ g/mol.

Meist weist das durch Gelpolymerisation erhaltene Copolymer (P) ein gewichtsmittleres Molekulargewicht M_{w} von mindestens 8*10⁵ g/mol, bevorzugt mindestens 1*10⁶ g/mol, besonders bevorzugt 2*10⁶ g/mol auf.

### Bevorzugte Copolymere (P)

In einer bevorzugten Ausführungsform der Erfindung handelt es sich bei den Copolymeren (P) um Copolymere (P1).

Die Copolymere (P1) enthalten als Monomer (A) (Meth)acrylamid, bevorzugt Acrylamid.

Die Copolymere (P1) umfassen als Makromonomere (B) Mischungen der Makromonomere (B1) und (B2), wobei der molare Anteil der Makromonomere (B1) insbesondere 0,3 bis 0,95, bevorzugt 0,45 bis 0,9, besonders bevorzugt 0,5 bis 0,9 und beispielsweise 0,5 bis 0,8 bezüglich der Summe von (B1) und (B2) beträgt.

Weiterhin haben beim Copolymer (P1) die Reste und Indices der Makromonomere (B1) und (B2) die folgende Bedeutung:
- R¹:: H oder Methyl,
- R²:: eine zweiwertige verknüpfende Gruppe -OR³⁵-, wobei R³⁵ für eine lineare 1,ω-Alkylengruppe mit 1 bis 6, bevorzugt 3 bis 6 und besonders bevorzugt 4 Kohlenstoffatomen steht,
- R³:: Ethylengruppen -CH₂CH₂-,
- R⁴:: unabhängig voneinander Alkylengruppen -CR⁶(R⁷)-CR⁸(R⁹)-, wobei die Summe der Kohlenstoffatome R⁶, R⁷, R⁸ und R⁹ jeweils 2 beträgt, und wobei bei mindestens 70 mol%, bevorzugt mindestens 80 mol% und besonders bevorzugt mindestens 95 mol% der Einheiten -CR⁶(R⁷)CR⁸(R⁹)- R⁶, R⁷ und R⁸ für H und R⁹ für Ethyl stehen,
- R⁵: eine Ethylengruppe -CH₂CH₂-,
- a: eine Zahl von 20 bis 28, bevorzugt 23 bis 26,
- b: eine Zahl von 10 bis 25, bevorzugt 14 bis 23, besonders bevorzugt 14 bis 20, ganz besonders bevorzugt 14 bis 18,
- c: eine Zahl von 0 bis 2, bevorzugt 0 bis 1,5, und
- d: eine Zahl von 1,5 bis 10, bevorzugt 1,5 bis 5.

Die Copolymere (P1) umfassen neben den Monomeren (A) und (B) weiterhin mindestens ein -SO₃H Gruppen bzw. deren Salze umfassendes Monomer (C). Beispiele derartiger Monomere wurden bereits genannt. Bevorzugt sind Vinylsulfonsäure, Allylsulfonsäure oder 2-Acrylamido-2-methylpropansulfonsäure, und besonders bevorzugt handelt es sich bei dem Monomer (C) um 2-Acrylamido-2-methylpropansulfonsäure.

In den Copolymeren (P1) beträgt die Menge der Monomere (A) in der Regel 40 bis 60 Gew.-%, bevorzugt 45 bis 55 Gew.-%, die Menge der Monomere (B) 0,1 bis 5 Gew.-%, bevorzugt 0,5 bis 3 Gew.-% und beispielsweise 0,8 bis 2,5 Gew.-%. und die Menge der Monomere (C) 40 bis 60 Gew.-%, bevorzugt 45 bis 55 Gew.-%, jeweils bezüglich der Summe aller Monomere des Copolymers (P1). Bevorzugt beträgt die Gesamtmenge der Monomere (A), (B) und (C) im Copolymer (P1) 100 Gew.-%. In einer Ausführungsform beträgt die Menge der Monomere (A) 40 bis 60 Gew.-%, bevorzugt 45 bis 55 Gew.-%, die Menge der Monomere (B) 0,1 bis 5 Gew.-%, bevorzugt 0,5 bis 3 Gew.-% und beispielsweise 0,8 bis 2,5 Gew.-%., die Menge der Monomere (C) 40 bis 60 Gew.-%, bevorzugt 45 bis 55 Gew.-%, und die Menge der Monomere (D) 1 bis 10 Gew.-%. jeweils bezüglich der Summe aller Monomere des Copolymers (P1).

### Copolymer (P2)

In einer weiteren bevorzugten Ausführungsform der Erfindung handelt es sich bei dem Copolymer (P) um ein Copolymer (P2).

Die Copolymere (P2) enthalten als Monomer (A) (Meth)acrylamid, bevorzugt Acrylamid.

Die Copolymere (P2) umfassen als Makromonomere (B) die bereits beschriebene Mischung der Makromonomere (B1) und (B2), wobei der molare Anteil der Makromonomere (B1) insbesondere 0,3 bis 0,95, bevorzugt 0,45 bis 0,9, besonders bevorzugt 0,5 bis 0,9 und beispielsweise 0,5 bis 0,8 bezüglich der Summe von (B1) und (B2) beträgt.

Weiterhin haben beim Copolymer (P2) die Reste und Indices der Makromonomere (B1) und (B2) die bereits für Copolymer (P1) geschilderte Bedeutung einschließlich der geschilderten bevorzugten Bereiche.

Die Copolymere (P2) umfassen neben den Monomeren (A) und (B) weiterhin mindestens zwei Monomere (C), nämlich mindestens ein COOH-Gruppen bzw. deren Salze umfassendes Monomer (C1), sowie mindestens ein SO₃H-Gruppen bzw. deren Salze umfassendes Monomer (C2).

Beispiele von Monomeren (C1) wurden bereits genannt und umfassen Acrylsäure, Methacrylsäure, Crotonsäure, Itaconsäure, Maleinsäure oder Fumarsäure. Bevorzugt ist (Meth)acrylsäure, besonders bevorzugt ist Acrylsäure.

Beispiele von Monomeren (C2) wurden bereits genannt. Bevorzugt sind Vinylsulfonsäure, Allylsulfonsäure oder 2-Acrylamido-2-methylpropansulfonsäure, und besonders bevorzugt handelt es sich bei dem Monomer (C2) um 2-Acrylamido-2-methylpropansulfonsäure.

In den Copolymeren (P2) beträgt die Menge der Monomere (A) in der Regel 30 bis 85 Gew.-%, bevorzugt 40 bis 80 Gew.-%, die Menge der Monomere (B) 0,5 bis 10 Gew.-%, bevorzugt 0,8 bis 5 Gew.-%, die Menge der Monomere (C1) 5 bis 40 Gew.-%, bevorzugt 5 bis 30 Gew.-% und die Menge der Monomere (C2) 5 bis 40 Gew.-%, bevorzugt 5 bis 30 Gew.-%, jeweils bezüglich der Summe aller Monomere des Copolymers (P). Bevorzugt beträgt die Gesamtmenge der Monomere (A), (B) und (C) im Copolymer (P2) 100 Gew.-%.

Beispielsweise enthält das bevorzugte Copolymeren (P2) 30 bis 99.99 Gew.-% (Meth)acrylamid, 0.01 bis 15 Gew.-% Makromonomer (B1), und 5 bis 64,9 Gew.-% Monomer (C) umfassend mindestens ein Monomer nach Formel (I) und mindestens ein Monomer mit einer Gruppe -COOH, wobei die Reste des Makromonomers (B1) und der Formel (I) eine der obenstehenden Bedeutungen haben.

In einem anderen Beispiel enthält das bevorzugte Copolymeren (P2) 45 bis 99.5 Gew.-% (Meth)acrylamid, 0.8 bis 5 Gew.-% Makromonomer (B1), und 5 bis 64,9 Gew.-% Monomer (C) umfassend mindestens ein Monomer nach Formel (I) und mindestens ein Monomer mit einer Gruppe -COOH, wobei die Reste des Makromonomers (B1) und der Formel (I) eine der obenstehenden Bedeutungen haben.

In einem anderen Beispiel enthält das bevorzugte Copolymeren (P2) 45 bis 99.5 Gew.-% (Meth)acrylamid, 0.8 bis 5 Gew.-% Makromonomer (B1), 5 bis 64,9 Gew.-% Monomer (C) umfassend mindestens ein Monomer nach Formel (I) und mindestens ein Monomer mit einer Gruppe -COOH, sowie bis zu 10 Gew.-% Monomer (D), wobei die Reste des Makromonomers (B1) und der Formel (I) eine der obenstehenden Bedeutungen haben.

In einem anderen Beispiel enthält das bevorzugte Copolymeren (P2) 45 bis 99.5 Gew.-% (Meth)acrylamid, 0.8 bis 5 Gew.-% Makromonomer (B1), 5 bis 64,9 Gew.-% Monomer (C) umfassend mindestens ein Monomer nach Formel (I) und mindestens ein Monomer mit einer Gruppe -COOH, sowie bis zu 10 Gew.-% N-Vinylpyrrolidon, wobei die Reste R¹ für H, R² für-(CH₂)₄-, R³ und R⁵ für -CH₂CH₂-, R⁴ für -CR⁶R7-CR⁸R⁹-, wobei die Reste R⁶, R⁷, R⁸ und R⁹ unabhängig voneinander für H oder einen linearen oder verzweigten Alkylrest 1 bis 3 Kohlenstoffatomen stehen, mit der Maßgabe, dass nicht alle Reste für H stehen und die Summe der Kohlenstoffatome der Reste R⁶, R⁷, R⁸ und R⁹ 3 beträgt, und wobei die Indices a für 20 bis 28, b für 8 bis 18, c für 0, und d für 2 bis 5 stehen.

### Tenside:

Üblicherweise enthält die agrochemische Zusammensetzung ein Tensid, bevorzugt ein nicht-ionisches Tensid.

Geeignete Tenside sind oberflächenaktive Verbindungen, wie anionische, kationische, nichtionische und amphotere Tenside, Blockpolymere, Polyelektrolyte und deren Mischungen. Solche Tenside können als Emulgator, Dispergiermittel, Lösungsvermittler, Netzmittel, Penetrationsförderer, Schutzkolloid oder Hilfsstoff verwendet werden. Beispiele für Tenside finden sich in McCutcheon's, Band 1: Emulsifiers & Detergents, McCutcheon's Directories, Glen Rock, USA, 2008 (Internationale Ausgabe oder Nordamerikanische Ausgabe).

Geeignete anionische Tenside sind Alkali-, Erdalkali- oder Ammoniumsalze von Sulfonaten, Sulfaten, Phosphaten, Carboxylaten und deren Mischungen. Beispiele für Sulfonate sind Alkylarylsulfonate, Diphenylsulfonate, alpha-Olefinsulfonate, Ligninsulfonate, Sulfonate von Fettsäuren und Ölen, Sulfonate von ethoxylierten Alkylphenolen, Sulfonate von alkoxylierten Arylphenolen, Sulfonate von kondensierten Naphthalinen, Sulfonate von Dodecyl- und Tridecylbenzolen, Sulfonate von Naphthalinen und Alkylnaphthalinen, Sulfosuccinate oder Sulfosuccinamate. Beispiele für Sulfate sind Sulfate von Fettsäuren und Ölen, von ethoxylierten Alkylphenolen, von Alkoholen, von ethoxylierten Alkoholen oder von Fettsäureestern. Beispiele für Phosphate sind Phosphatester. Beispiele für Carboxylate sind Alkylcarboxylate sowie carboxylierte Alkohol- oder Alkylphenolethoxylate.

Geeignete nichtionische Tenside sind Alkoxylate, N-substituierte Fettsäureamide, Aminoxide, Ester, Tenside auf Zuckerbasis, polymere Tenside und deren Mischungen. Beispiele für Alkoxylate sind Verbindungen wie Alkohole, Alkylphenole, Amine, Amide, Arylphenole, Fettsäuren oder Fettsäureester, die mit 1 bis 50 Äquivalenten alkoxyliert worden sind. Für die Alkoxylierung können Ethylenoxid und/oder Propylenoxid eingesetzt werden, vorzugsweise Ethylenoxid. Beispiele für N-substituierte Fettsäureamide sind Fettsäureglucamide oder Fettsäurealkanolamide. Beispiele für Ester sind Fettsäureester, Glycerinester oder Monoglyceride. Beispiele für Tenside auf Zuckerbasis sind Sorbitane, ethoxylierte Sorbitane, Saccharose- und Glucoseester oder Alkylpolyglucoside. Beispiele für polymere Tenside sind Homo- oder Copolymere von Vinylpyrrolidon, Vinylalkoholen oder Vinylacetat.

Geeignete kationische Tenside sind quartäre Tenside, z.B. quartäre Ammoniumverbindungen mit einer oder zwei hydrophoben Gruppen, oder Salze von langkettigen primären Aminen. Geeignete amphotere Tenside sind Alkylbetaine und Imidazoline. Geeignete Blockpolymere sind Blockpolymere des A-B- oder des A-B-A-Typs umfassend Polyethylenoxid- und Polypropylenoxidblöcke, oder des A-B-C-Typs umfassend Alkanol, Polyethylenoxid und Polypropylenoxid. Geeignete Polyelektrolyte sind Polysäuren oder Polybasen. Beispiele für Polysäuren sind Alkalisalze der Polyacrylsäure oder Polysäure-Kammpolymere. Beispiele für Polybasen sind Polyvinylamine oder Polyethylenamine.

Geeignete Tenside sind Verbindungen, die selbst eine vernachlässigbar kleine oder gar keine pestizide Wirksamkeit aufweisen und die die biologische Auswirkung der Verbindung I auf das Ziel verbessern. Beispiele sind Tenside, mineralische oder pflanzliche Öle und andere Hilfsstoffe. Weitere Beispiele finden sich bei Knowles, Adjuvants and additives, Agrow Reports DS256, T&F Informa UK, 2006, Kapitel 5.

Bevorzugte nicht-ionische Tenside sind Polyether, beispielsweise Alkoxylate, besonders bevorzugt Alkoxylate von Fettaminen, Arylalkoholen, Alkylarylalkoholen, Fettalkoholen, oder polymerisiertes Alkylenoxid, beispielsweise Ethylenoxid. Im Besonderen sind nicht-ionische Tenside Alkoxylate von C₅-C₂₀-Fettalkoholen oder Alkoxylate enthaltend Polyethylenoxid und Polypropylenoxid.

Geeignete Alkoxylate von C₅-C₂₀-Fettalkoholen sind Ethoxylate, Propoxylate, Butoxylate, sowie gemischte Alkoxylate aus Ethylenoxid, Propylenoxid und Butylenoxid, von Hexanol, Heptanol, Octanol, Nonanol, Decanol, Undecanol, Dodecanol, Tridecanol, Tetradecanol, Pentadecanol, Hexadecanol, Heptadecanol, Octadecanol, Nonadecanol, Eicosanol, sowie deren verzweigte Isomere und ungesättigten Derivate, beispielsweise, 2-Ethylhexanol, Isotridecanol, Linoeylalkohol, Palmitoleylalkohol, Oleylalkohol, oder Elaidylalkohol. Bevorzugte Alkoxylate von C₆-C₂₀-Fettalkoholen sind Decanolethoxylat, Dodecanolethoxylat, Isotridecylalkoholethoxylat, Stearylalkoholethoxylat, Linoleylethoxylat. In einer Ausführungsform ist das Alkoxylat eines C₅-C₂₀-Fettalkohols ein Ethoxylat eines Stearylalkohols. In einer anderen Ausführungsform ist das Alkoxylat eines C₅-C₂₀-Fettalkohols ein Decanolethoxylat. In einer weiteren Ausführungsform ist das Alkoxylat eines C₅-C₂₀-Fettalkohols ein Tridecylalkoholalkoxylat.

Bevorzugte Alkoxylate von C₅-C₂₀-Fettalkoholen sind Alkoxylate von C₁₀-C₁₈-Fettalkoholen, besonders bevorzugt von C₁₂-C₁₈-Fettalkoholen, und im Speziellen von C₁₂-C₁₅-Fettalkoholen. Die Fettalkohole können verzweigt oder unverzweigt sein, gesättigt oder ungesättigt.

In einer ersten Ausführungsform enthält die agrochemische Zusammensetzung ein Copolymer (P) mit einem gewichtsmittleren Molekulargewicht von 50000 bis 500000 g/mol (bevorzugt von 100000 bis 500000 g/mol) und ein Tensid (bevorzugt ein nicht-ionisches Tensid), im Besonderen ein Alkoxylat von Fettalkoholen, beispielsweise ein ethoxylierter C₅-C₂₀-Fettalkohol, im Besonderen

In einer zweiten Ausführungsform enthält die agrochemische Zusammensetzung ein Copolymer (P) mit einem gewichtsmittleren Molekulargewicht von mindestens 1000000 g/mol und kein Tensid, bevorzugt kein nicht-ionisches Tensid.

In einer dritten Ausführungsform enthält die agrochemische Zusammensetzung ein Copolymer (P) mit einem gewichtsmittleren Molekulargewicht von mindestens 1000000 g/mol und ein nicht-ionisches Tensid, bevorzugt polymerisiertes Alkylenoxid, beispielsweise Polyethylenoxid, Polypropylenoxid, Polybtuylenoxid, gemischte Polymere aus Ethylenoxid und Propylenoxid oder gemischte Polymere aus Ethylenoxid und Butylenoxid, bevorzugt polyethylenoxid oder ein gemischtes Polymer aus Ethylenoxid und Propylenoxid, besonders bevorzugt ein gemischtes Polymer aus Ethylenoxid und Propylenoxid, und im Besonderen ein Blockcopolymer aus Ethylenoxid und Propylenoxid.

In einer Ausführung bezieht sich die agrochemische Zusammensetzungen auf Konzentrate, welche durch Verdünnung mit Wasser zu Spritzbrühen aufbereitet werden können. In einer zweiten Ausführung bezieht sich die agrochemsiche Zusammensetzung auf soche Spritzbrühen.

Die Konzentration des Copolymers (P) in Spritzbrühen liegt üblicherweise bei 10 bis 1000 ppm, bevorzugt 20 bis 500 ppm, besonders bevorzugt 30 bis 100 ppm. Die Konzentration des Copolymers (P) geht üblicherweise bis 300 ppm, bevorzugt bis 200 ppm, und speziell bis 100 ppm. Die Konzentration des Copolymers (P) liegt gewöhnlich über 40 ppm, bevorzugt über 45 ppm. In einer Ausführungsform liegt die Konzentration des Copolymers (P) bei mindestens 0,1 ppm, bevorzugt mindestens 0,5 ppm, speziell mindestens 1 ppm, beispielsweise mindestens 5 ppm. In einer weiteren Ausführungsform liegt die Konzentration des Copolymers (P) bei 0,5 bis 300 ppm, bevorzugt 1 bis 300 ppm, besonders bevorzugt 1 bis 250 ppm.

Die dimensionslose Einheit ppm, wie in dieser Anmeldung verwendet, bezieht sich auf das Verhältnis der Masse eines Stoffes, geteilt durch die Masse eines zweiten Stoffes.

Die Konzentration des Copolymers (P) in Konzetraten kann 3 Gew.-% erreichen , bevorzugt 2,5 Gew.-%., besonders bevorzugt 0,8 Gew.-%, und im Speziellen 0.5 Gew.-%. Die Konzentration des Copolymers (P) in Konzentraten beträgt üblicher Weise bis 3 Gew.-%, bevorzugt bis 2 Gew.-%, besonders bevorzugt bis 1 Gew.-%.

Die Konzentration des Tensids in der agrochemischen Zusammensetzung, bevorzugt des nicht-ionischen Tensids, liegt meist im Bereich von 0.1 bis 50 Gew.-%, bevorzugt von 0.5 bis 40 Gew.-% und besonders bevorzugt von 1 bis 30 Gew.-%. Die Konzentration in der agrochemischen Zusammensetzung beträgt bis zu 50 Gew.%, bevorzugt bis zu 40 Gew.-% und besonders bevorzugt bis zu 30 Gew.-%.

Die agrochemische Zusammensetzung enthält ein Pestizid. Der Begriff Pestizid bezeichnet mindestens einen Wirkstoff ausgewählt aus der Gruppe der Fungizide, Insektizide, Nematizide, Herbizide, Safener, Biopesticide und/oder Wachstumsregulatoren. Bevorzugte Pestizide sind Fungizide, Insektizide, Herbizide, und Wachstumsregulatoren. Besonders bevorzugte Pestizide sind Wachstumsregulatoren. Auch Mischungen von Pestiziden aus zwei oder mehr der vorgenannten Klassen können verwendet werden. Der Fachmann ist vertraut mit solchen Pestiziden, die beispielsweise in Pesticide Manual, 16th Ed. (2013), The British Crop Protection Council, London, gefunden werden können. Geeignete Insektizide sind Insektizide der Klasse der Carbamate, Organophophate, Organochlor-Insektizide, Phenylpyrazole, Pyrethroide, Neonicotinoide, Spinosine, Avermectine, Milbemycine, Juvenil Hormon Analoga, Alkylhalide, Organozinn-Verbindungen, Nereistoxin-Analoga, Benzoylharnstoffe, Diacylhydrazine, METI Akarizide, sowie Insektizide wie Chloropicrin, Pymetrozin, Flonicamid, Clofentezin, Hexythiazox, Etoxazol, Diafenthiuron, Propargit, Tetradifon, Chlorfenapyr, DNOC, Buprofezin, Cyromazin, Amitraz, Hydramethylnon, Acequinocyl, Fluacrypyrim, Rotenon, oder deren Derivate. Geeignete Fungizide sind Fungizide der Klassen Dinitroaniline, Allylamine, Anilinopyrimidine, Antibiotica, aromatische Kohlenwasserstoffe, Benzenesulfonamide, Benzimidazole, Benzisothiazole, Benzophenone, Benzothiadiazole, Benzotriazine, Benzylcarbamate, Carbamates, Carboxamide, Carbonsäureamide, Chloronitrile, Cyanoacetamideoxime, Cyanoimidazole, Cyclopropanecarboxamide, Dicarboximide, Dihydrodioxazine, Dinitrophenylcrotonate, Dithiocarbamate, Dithiolane, Ethylphosphonate, Ethylaminothiazolcarboxamide, Guanidines, Hydroxy-(2-amino-)pyrimidine, Hydroxyanilides, Imidazole, Imidazolinone, Anorganika, Isobenzofuranone, Methoxyacrylate, Methoxycarbamates, Morpholines, N-Phenylcarbamate, Oxazolidinedione, Oximinoacetate, Oximinoacetamide, Peptidylpyrimidinnucleoside, Phenylacetamide, Phenylamide, Phenylpyrrole, Phenylharnstoffe, Phosphonate, Phosphorothiolate, Phthalamsäuren, Phthalimide, Piperazine, Piperidine, Propionamide, Pyridazinone, Pyridine, Pyridinylmethylbenzamide, Pyrimidinamine, Pyrimidine, Pyrimidinonehydrazone, Pyrroloquinolinone, Quinazolinone, Chinoline, Chinone, Sulfamide, Sulfamoyltriazole, Thiazolecarboxamide, Thiocarbamate, Thiophanate, Thiophenecarboxamide, Toluamide, Triphenylzinn Verbindungen, Triazine, Triazole. Geeignete Herbizide sind Herbizide der Klassen der Acetamide, Amide, Aryloxyphenoxypropionate, Benzamide, Benzofuran, Benzoesäuren, Benzothiadiazinone, Bipyridylium, Carbamate, Chloroacetamide, Chlorcarbonsäuren, Cyclohexanedione, Dinitroaniline, Dinitrophenol, Diphenylether, Glycine, Imidazolinone, Isoxazole, Isoxazolidinone, Nitrile, N-phenylphthalimide, Oxadiazole, Oxazolidinedione, Oxyacetamide, Phenoxycarbonsäuren, Phenylcarbamate, Phenylpyrazole, Phenylpyrazoline, Phenylpyridazine, Phosphinsäuren, Phosphoroamidate, Phosphorodithioate, Phthalamate, Pyrazole, Pyridazinone, Pyridine, Pyridincarbonsäuren, Pyridinecarboxamide, Pyrimidindione, Pyrimidinyl(thio)benzoate, Chinolincarbonsäuren, Semicarbazone, Sulfonylaminocarbonyltriazolinone, Sulfonylharnstoffe, Tetrazolinone, Thiadiazole, Thiocarbamate, Triazine, Triazinone, Triazole, Triazolinone, Triazolocarboxamide, Triazolopyrimidine, Triketone, Uracile, Harnstoffe.

Bevorzugte Pestizide sind ionische Pestizide, zumeiste gewählt aus der Klasse der Herbizide, beispielsweise Glyphosat, Gluphosinat, Paraquat, Bipyridil, Dicamba, 2,4-Dichlorophenoxyessigsäure, Aminopyralid, Clopyralid, Fluroxypyr, Imazapyr, Imazapic, 2-Methyl-4-Chlorophenoxyessigsäure, Pendimethalin, or Triclopyr. Bevorzugte ionische Pestizide sind anionische Pestizide, beispielsweise Glyphosat, Gluphosinat, Dicamba, 2,4-Dichlorophenoxyessigsäure, Aminopyralid, Clopyralid, Fluroxypyr, Imazapic, 2-Methyl-4-Chlorophenoxyessigsäure, oder Triclopyr, besonders bevorzugt Glyphosat und Dicamba. Ein weiteres bevorzugtes Herbizid ist Dimethenamid-P.

Weitere bevorzugte Pestizide sind Insektizide oder Fungizide. Beispiele sind Pyraclostrobin, Metaflumizon, Chlorthalonil, Chlorfenapyr, Broflanilid, 2-[4-(4-chlorophenoxy)-2-(trifluoromethyl)phenyl]-1-(1,2,4-triazol-1-yl)propan-2-ol, 1-[4-(4-chlorophenoxy)-2-(trifluoromethyl)phenyl]-1-cyclopropyl-2-(1,2,4-triazol-1-yl)ethanol, 2-[4-(4-chlorophenoxy)-2-(trifluoromethyl)phenyl]-3-methyl-1-(1,2,4-triazol-1-yl)butan-2-ol, Thiomethoxam, Fipronil, Epoxiconazol, Trifloxystrobin, Boscalid, Azoxistrobin, alpha-Cypermethrin, Abamectin, Cyflumetofen, Cyclaniliprol, Tetraniliprol, Cyantraniliprol, Chlorantraniliprol, Imidacloprid, Dinotefuran, Chlothianidin, Acetamiprid, Thiacloprid, and Spinosad.

In einer Ausführungsform wird das Pestizid gewählt aus Dimethenamid-P, 2-[4-(4-chlorophenoxy)-2-(trifluoromethyl)phenyl]-1-(1,2,4-triazol-1-yl)propan-2-ol, Glyphosat, Dicamba. Mischungen der vorgenannten Pestizidklassen und/oder der speziellen Pestizide sind ebenfalls möglich.

Die Konzentration des Pestizids in der agrochemischen Zusammensetzung ist üblicherweise von 5 bis 99 Gew.-%, bevorzugt 10 bis 99 Gew.-%, besonders bevorzugt 30-95 Gew.-%.

Die Konzentration des Pestizids in der agrochemischen Zusammensetzung beträgt mindestens 5 Gew.-%, bevorzugt mindestens 10 Gew.-%, besonders bevorzugt mindestens 20 Gew.-%.

Die agrochemische Zusammensetzung kann in den üblichen Arten von agrochemischen Zusammensetzungen vorliegen oder überführt werden, z.B. Lösungen, Emulsionen, Suspensionen, Stäube, Pulver, Pasten, Granulate, Kompaktate, Kapseln und Mischungen davon. Arten von Zusammensetzungen sind z.B. Suspensionen (z.B. SC, OD, FS), Emulsionskonzentrate (z.B. EC), Emulsionen (z.B. EW, EO, ES, ME), Kapseln (z.B. CS, ZC), Pasten, Dragees, Spritzpulver oder Stäube (z.B. WP, SP, WS, DP, DS), Kompaktate (z.B. BR, TB, DT), Granulate (z.B. WG, SG, GR, FG, GG, MG), insektizide Produkte (z.B. LN), sowie Gelformulierungen für die Behandlung von pflanzlichem Vermehrungsmaterial wie Samen (z.B. GF). Diese und weitere Arten von Zusammensetzungen sind in "Catalogue of pesticide formulation types and international coding system", Technische Monographie Nr. 2, 6. Ausgabe, Mai 2008, CropLife International definiert. Bevorzugt sind Suspensionen, Emulsionskonzentrate, Emulsionen und Lösungen.

Die Zusammensetzungen werden auf bekannte Weise hergestellt, wie z.B. gemäß Mollet und Grubemann, Formulation technology, Wiley VCH, Weinheim, 2001; oder Knowles, New developments in crop protection product formulation, Agrow Reports DS243, T&F Informa, London, 2005.

Geeignete Hilfsstoffe sind Lösungsmittel, flüssige Träger, feste Träger oder Füllstoffe, Schutzkolloide, Haftmittel, Verdickungsmittel, Feuchthaltemittel, Abwehrstoffe, Lockstoffe, Fraßstimulanzien, Kompatibilisierungsmittel, Bakterizide, Gefrierschutzmittel, Schaumhemmer, Farbmittel, Klebstoffe und Bindemittel.

Geeignete Lösungsmittel und flüssige Träger sind Wasser und organische Lösungsmittel wie Mineralölfraktionen mit mittlerem bis hohem Siedepunkt, z.B. Kerosin, Dieselöl; Öle pflanzlichen oder tierischen Ursprungs; aliphatische, cyclische und aromatische Kohlenwasserstoffe, z.B. Toluol, Paraffin, Tetrahydronaphthalin, alkylierte Naphthaline; Alkohole, z.B. Ethanol, Propanol, Butanol, Benzylalkohol, Cyclohexanol; Glykole; DMSO; Ketone, z.B. Cyclohexanon; Ester, z.B. Lactate, Carbonate, Fettsäureester, gamma-Butyrolacton; Fettsäuren; Phosphonate; Amine; Amide, z.B. N-Methylpyrrolidon, Fettsäuredimethylamide; und deren Mischungen.

Geeignete feste Träger oder Füllstoffe sind Mineralerden, z.B. Silikate, Silikagele, Talk, Kaoline, Kalkstein, Kalk, Kreide, Tone, Dolomit, Diatomeenerde, Bentonit, Calciumsulfat, Magnesiumsulfat, Magnesiumoxid; Polysaccharide, z.B. Cellulose, Stärke; Düngemittel, z.B. Ammoniumsulfat, Ammoniumphosphat, Ammoniumnitrat, Harnstoffe; Produkte pflanzlichen Ursprungs, z.B. Getreidemehl, Baumrindenmehl, Holzmehl, Nussschalenmehl, und deren Mischungen.

Geeignete Verdickungsmittel sind Polysaccharide (z.B. Xanthangummi, Carboxymethylcellulose), anorganische Tone (organisch modifiziert oder unmodifiziert), Polycarboxylate und Silicate.

Geeignete Bakterizide sind Bronopol und Isothiazolinderivate wie Alkylisothiazolinone und Benzisothiazolinone.

Geeignete Gefrierschutzmittel sind Ethylenglykol, Propylenglykol, Harnstoff und Glycerin. Geeignete Schaumhemmer sind Silicone, langkettige Alkohole und Salze von Fettsäuren.

Geeignete Farbstoffe (z.B. in rot, blau oder grün) sind Pigmente, die in Wasser schlecht löslich sind, und wasserlösliche Farbstoffe. Beispiele sind anorganische Farbmittel (z.B. Eisenoxid, Titanoxid, Eisenhexacyanoferrat) und organische Farbmittel (z.B. Alizarin-, Azo- und Phthalocyaninfarbmittel).

Geeignete Haftmittel oder Bindemittel sind Polyvinylpyrrolidone, Polyvinylacetate, Polyvinylalkohole, Polyacrylate, biologische oder synthetische Wachse und Celluloseether.

Feuchtbeizen (LS), Suspoemulsionen (SE), Suspensionskonzentrate (FS), Saatgutpuder (DS), Schlämmpulver (WS), Nassbeizen (SS), Emulsionen (ES), Emulsionskonzentrate (EC) und Gele (GF) werden üblicherweise für die Behandlung von pflanzlichem Vermehrungsgut, insbesondere von Samen, eingesetzt. Die betreffenden Zusammensetzungen führen nach zweibis zehnfacher Verdünnung zu Wirkstoffkonzentrationen von 0,01 bis 60 Gew.-%, vorzugsweise von 0,1 bis 40 Gew.-%, in den gebrauchsfertigen Präparaten. Die Ausbringung kann vor dem

Säen oder während des Säens erfolgen. Zu den Verfahren für die Ausbringung der Verbindung I und ihren Zusammensetzungen auf pflanzliches Vermehrungsgut, insbesondere Samen, bzw. deren Behandlung mit der Verbindung I und ihren Zusammensetzungen zählen Beizen, Beschichten, Pelletieren, Bestäuben, Einweichen des Vermehrungsguts und die Anwendung in der Saatfurche. Vorzugsweise werden die Verbindungen I beziehungsweise ihre Zusammensetzungen auf das pflanzliche Vermehrungsgut mit einem Verfahren ausgebracht, bei dem keine Keimung induziert wird, z.B. durch Saatgutbeizen, Pelletieren, Beschichten und Bestäuben.

Beim Einsatz im Pflanzenschutz betragen die Aufwandmengen der Wirkstoffe je nach der Art des gewünschten Effekts 0,001 bis 2 kg pro ha, bevorzugt 0,005 bis 2 kg pro ha, besonders bevorzugt 0,05 bis 0,9 kg pro ha, und insbesondere 0,1 bis 0,75 kg pro ha.

Bei der Behandlung von pflanzlichem Vermehrungsgut wie Samen, z.B. durch Bestäuben, Beschichten oder Tränken des Saatguts, benötigt man im Allgemeinen Wirkstoffmengen von 0,1 bis 1000 g, bevorzugt 1 bis 1000 g, besonders bevorzugt 1 bis 100 g und insbesondere 5 bis 100 g pro 100 kg pflanzlichem Vermehrungsgut (vorzugsweise Samen).

Bei der Verwendung im Materialschutz oder im Schutz lagernder Güter hängt die eingesetzte Wirkstoffmenge von der Art des Einsatzgebiets bzw. dem gewünschten Effekt ab. Mengen, die üblicherweise im Materialschutz eingesetzt werden sind 0,001 g bis 2 kg, vorzugsweise 0,005 g bis 1 kg, Wirkstoff pro Kubikmeter behandeltes Material.

Zu den Wirkstoffen oder den sie umfassenden Zusammensetzungen können als Vormischung oder gegebenenfalls erst kurz vor der Verwendung (Tank-Mix) verschiedene Arten von Ölen, Netzmitteln, Adjuvantien, Düngemitteln oder Mikronährstoffen sowie weitere Pestizide (z.B. Herbizide, Insektizide, Fungizide, Wachstumsregulatoren, Safener) hinzugefügt werden. Diese Mittel können den erfindungsgemäßen Zusammensetzungen im Gewichtsverhältnis 1:100 bis 100:1, vorzugsweise 1:10 bis 10:1, zugemischt werden.

Der Verwender appliziert die erfindungsgemäße Zusammensetzung üblicherweise aus einem Vordosierungsgerät, einer Rückenspritze, einem Spritztank, einem Spritzflugzeug oder einem Bewässerungssystem. Üblicherweise wird die agrochemische Zusammensetzung mit Wasser, Puffer und/oder weiteren Hilfsstoffen auf die gewünschte Ausbringungskonzentration verdünnt, wodurch man die gebrauchsfertige Spritzflüssigkeit bzw. agrochemische Zusammensetzung der Erfindung erhält. Üblicherweise werden pro Hektar landwirtschaftlicher Nutzfläche 20 bis 2000 Liter, vorzugsweise 50 bis 400 Liter, der gebrauchsfertigen Spritzbrühe ausgebracht.

Gemäß einer Ausführungsform können Einzelkomponenten der erfindungsgemäßen Zusammensetzung, wie Teile eines Kits oder Teile einer Zwei- oder Drei-Komponenten-Mischung vom Verwender selbst in einem Spritztank gemischt werden, und es können gegebenenfalls weitere Hilfsstoffe hinzugefügt werden.

In einer weiteren Ausführungsform können entweder Einzelkomponenten der erfindungsgemäßen Zusammensetzung oder teilweise vorgemischte Komponenten vom Verwender in einem Spritztank gemischt werden und weitere Hilfsstoffe und Zusatzstoffe können gegebenenfalls hinzugefügt werden.

In einer weiteren Ausführungsform können entweder Einzelkomponenten der erfindungsgemäßen Zusammensetzung oder teilweise vorgemischte Komponenten gemeinsam (z.B. nach dem Mischen im Tank) oder der Reihe nach ausgebracht werden.

Die Einheit "ppm", wie sie in dieser Beschreibung verwendet wird, ist dimensionslos und bezieht sich auf die Gewichtskonzentration eines Stoffes, beispielsweise des Copolymers (P) in einem zweiten Stoff, beispielsweise einem Lösungsmittel.

### Vorteile der Erfindung:

Die agrochemische Zusammensetzung weist unter anderem eine verringerte Bildung von kleinen Tröpfchen beim Versprühen der Zusammensetzung auf. Dadurch wird ein verringerter Windabdrift erreicht, was die sichere Handhabung, den Verbrauch an Pestiziden, die Toxizität und die Resistenzbildung positiv beeinflusst. Das Copolymer (P) ist ungiftig und kann in industriellem Maßstab produziert werden. Die vorteilhaften Eigenschaften des Copolymers (P) sind zudem unabhängig vom Elektrolytgehalt der Zusammensetzung,so dass eine breite Einsetzbarkeit besteht. Weiterhin kann das Copolymer (P) jedwedem Formulierungssystem zugesetzt werden und die Aufwandmente des Copolymers (P) im Vergleich zu anderen Zusätzen zur Verringerung des Sprühabdrifts ist geringer.

Die folgenden Beispiele sind zur Veranschaulichung der Erfindung beigefügt.

Beispiele:
Polymer A: 48 Gew.-% 2-Acrylamido-2-methylpropansulfonat; 50 Gew.-% Acrylamid; 2 Gew.-% Hydroxybutyl-vinyl-ether, alkoxyliert mit 20-30 Einheiten Ethylenoxid, 10-20 Einheiten Butylenoxid, und 1-10 Einheiten Ethylenoxid; Mw > 1000000 g/mol.
Polymer B: 45 Gew.-% 2-Acrylamido-2-methylpropansulfonat; 50 Gew.-% Acrylamid; 5 Gew.-% Hydroxybutyl-vinyl-ether, alkoxyliert mit 20-30 Einheiten Ethylenoxid, 10-20 Einheiten Butylenoxid, und 1-10 Einheiten Ethylenoxid; Mw > 1000000 g/mol.
Polymer C: 40 Gew.-% 2-Acrylamido-2-methylpropansulfonat; 50 Gew.-% Acrylamid; 10 Gew.-% Hydroxybutyl-vinyl-ether, alkoxyliert mit 20-30 Einheiten Ethylenoxid, 10-20 Einheiten Butylenoxid, und 1-10 Einheiten Ethylenoxid; Mw > 1000000 g/mol.
Vergleichspolymer D: 50 Gew.-% 2-Acrylamido-2-methylpropansulfonat, 50 Gew.-% Acrylamid; Mw > 1000000 g/mol.
Polymer E: 40 Gew.-% 2-Acrylamido-2-methylpropansulfonat, 50 Gew.-% Acrylamid, 10 Gew.-% Hydroxybutyl-vinyl-ether, alkoxyliert mit 20-30 Einheiten Ethylenoxid, 10-20 Einheiten Butylenoxid, und 1-10 Einheiten Ethylenoxid; Mw 100000-500000 g/mol.
Vergleichspolymer F: 50 Gew.-% 2-Acrylamido-2-methylpropansulfonat, 50 Gew.-% Acrylamid; Mw 100000-500000 g/mol.
Polymer H: 48 Gew.-% 2-Acrylamido-2-methylpropansulfonat, 45 Gew.-% Acrylamid, 5 Gew.-% N-vinylpyrrolidon, 2 Gew.-% Hydroxybutyl-vinyl-ether, alkoxyliert mit 20-30 Einheiten Ethylenoxid, 10-20 Einheiten Butylenoxid, und 1-10 Einheiten Ethylenoxid; Mw > 1000000 g/mol.
Tensid A: Nicht-ionisches C₁₀-C₁₅ Alkoholethoxylat, dynamische Viskosität 75 mPas, mit Wasser in jedem Verhältnis mischbar.
Tensid B: Nicht-ionisches Alkoxylat, enthaltend Polyethylenoxid und Polypropylenoxid als Blockcopolymer, M_{W} 800 bis 1100 g/mol.
Tensid C: Ethoxyliertes Talgamin; Ethoxylierungsgrad 15-25 EO-Einheiten pro Molekül.
Tensid D: Nicht-ionisches Kondensationsprodukt enthaltend Polyethylenoxid und Polypropylenoxid als Blockcopolymer; Molgewicht ca. 6500 g/mol; 50 Gew.-% Anteil an polymerisiertem Ethylenoxid.
Tensid E: Mischung aus Polyaminphosphat, Naphta, und Polyoxyethylenfettammoniummethosulfat, flüssig bei 25 °C
Lösungsmittel A: Kohlenwasserstoffgemisch enthaltend mindestens 99 Gew.-% aromatische Kohlenwasserstoffe; Naphthalenkonzentration kleiner 0,9 Gew.-%
Benetzungsmittel A: Benzolsulfonsäure-Formaldehyd-Phenol-Harnstoffkondensat; Natriumsalz Hyperverzweigtes Polymer: Polymer aus polytetrahydrofuran und Zitränensäuremonohydrat, modifiziert mit modified with isophorondiisozyanat, Methylpolyethyleneglycol, und C₁₆-C₁₈-Fettal-koholpolyethylenglycol, wie offenbart in Synthesebeispiel 8 in PCT/EP2015/079344
Füllstoff A: Magnesium-Aluminium-Silikat; Smektit
Verdicker A: Xanthan
Biozid: Mischung aus 2,5 Gew.-% 1,2-Benzisothiazolin-3-on und 2,5 Gew.-% 2-Methyl-4-isothiazolin-3-on
Entschäumer: Nichtionisches Silikonöl, pH 5-8
Fungizid A: 2-[4-(4-Chlorophenoxy)-2-(trifluoromethyl)phenyl]-1-(1,2,4-triazol-1-yl)propan-2-ol
Herbizid A: Dimethenamid-P

Herstellung der Polymere: Die Polymere und Vergleichspolymere A bis D, und H in den Versuchen wurden duch Gelpolymerisation, wie oben beschrieben, analog zum veröffentlichten Herstellungsprozess in den Beispielen 2 bis 8 in WO 2010/133527 hergestellt.

Die Polymere und Vergleichspolymere E und F wurden durch Lösungspolymerisation, wie oben beschrieben, hergestellt.

Herstellung der Monomere: Die alkoxylierten Hydroxybutylvinylether, welche in den Polymeren und Vergleichspolymeren in den Versuchen eingesetzt wurden, wurden nach der Herstellvorschrift im Versuchsteil zur Herstellung der Makromonomere (B) in PCT/EP2014/076772 beschrieben dargestellt.

### Beispiel-1: Verminderung des Anteils an Feintröpfchen durch hochmolekulare Polymere.

Vier unterschiedliche wässrige Lösungen S1, S2, S3 und S4 enthaltend jeweils nur eines der Polymere A, B, C oder Vergleichspolymer D in dieser Reihenfolge, wurden mit einer Konzentration von 50 ppm hergestellt. Die Lösungen wurden bei einem Druck von 2.78 bar durch eine XR-Düse (XR-11004, Teejet) versprüht. Der Anteil von Feintröpfchen mit einem Durchmesser kleiner 100 µm wurde durch Laserstreuung gemessen, wobei die Detektion mittels eines CCD-Detektors durchgeführt wurde. Die Ergebnisse wurden in Tabelle 1 dargestellt.

**Tabelle 1:**

| | Wasser | S1 | S2 | S3 | S4* |
|---|---|---|---|---|---|
| Anteil Feintröpfchen in % | 16.5 | 12.5 | 11.8 | 11 | 14.5 |

| | | | | | |
|---|---|---|---|---|---|
| *Vergleichsversuch | | | | | |

Beispiel-2: Verminderung des Anteils an Feintröpfchen durch niedermolekulare Polymere. Zwei unterschiedliche wässrige Lösungen S5 und S6 enthaltend jeweils nur eines der Polymere E oder Vergleichspolymer F in dieser Reihenfolge wurden mit einer Konzentration von 50 ppm hergestellt. Die Verminderung des Anteils von Feintröpfchen beim Sprühvorgang wurde wie in Beispiel 1 durchgeführt. Die Ergebnisse wurden in Tabelle 2 dargestellt.

**Tabelle 2:**

| | Water | S5 | S6* |
|---|---|---|---|
| Anteil Feintröpfchen in %. | 16.5 | 14 | 16 |

| | | | |
|---|---|---|---|
| *Vergleichsversuch | | | |

### Beispiel-3: Variation des Alkoxylierungsmusters von Copolymer (P)

Polymere G1 bis G9 wurden durch Gelpolymerisation hergestellt. Alle enthielten 48 Gew.-% 2-Acrylamido-2-methylpropansulfonat, 50 Gew.-% Acrylamid, 2 Gew.-% Hydroxybutyl-vinyl-ether und wiesen ein gewichtsmittleres Molekulargewicht von 100000 bis 500000 g/mol auf. Die Alkoxylierung des Hydroxybutylvinylethers wurde gemäß Tabelle 3 verändert, wobei die Indices a, b, und d denen in Formel I entsprechen und die Zahl der Ethylenoxid, der Butylenoxid, und der Ethylenoxideinheiten in dieser Reihenfolge angeben.

Die Polymere wurden in Wasser mit einer Konzentration von 50 ppm gelöst und die Tröpfchengröße beim Sprühvorgang wie in Beispiel-1 gemessen. Die Ergebnisse sind in Tabelle 4 dargestellt, wobei alle Messungen auf Wasser normiert wurden.

**Tabelle 3:**

| Polymer | Index a | Index b | Index d |
|---|---|---|---|
| G1 | 24.5 | 16 | 0 |
| G2 | 24.5 | 5 | 3.5 |
| G3 | 24.5 | 16 | 10 |
| G4 | 24.5 | 10 | 3.5 |
| G5 | 24.5 | 16 | 3.5 |
| G6 | 24.5 | 16 | 16 |
| G7 | 12 | 16 | 16 |
| G8 | 125 | 16 | 3.5 |
| G9 | 24.5 | 22 | 3.5 |

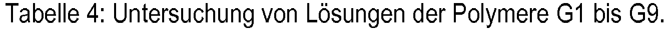

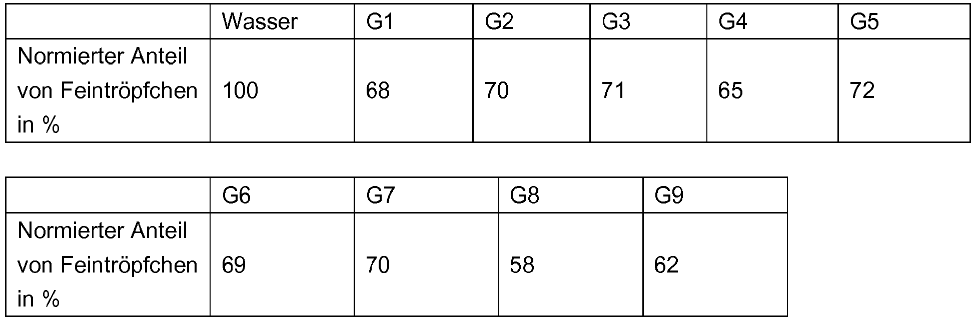

Beispiel-4: Konzentrationsabhängigkeit der Verminderung des Anteils an Feintröpfchen Wässrige Lösungen S7 bis S9 des Polymers A mit Konzentrationen entsprechend Tabelle 5 wurden hergestellt.

**Tabelle 5:**

| | S7 | S8 | S9 |
|---|---|---|---|
| Konzentration Polymer A in ppm | 50 | 70 | 90 |

Die Verminderung des Anteils von Feintröpfchen beim Sprühvorgang wurde wie in Beispiel 1 durchgeführt. Die Ergebnisse wurden in Tabelle 6 dargestellt.

**Tabelle 6:**

| | Wasser | S7 | S8 | S9 |
|---|---|---|---|---|
| Anteil von Feintröpfchen in % | 15.3 | 14 | 12 | 10 |

### Beispiel-5: Cooperativer Effekt von Copolymer (P) und nicht-ionischen Tensiden

Eine wässrige Lösung S10 von Polymer E mit einer Konzentration von 50 ppm wurde mit unterschiedlichen Konzentrationen Tensid A versezt und die Verminderung des Anteils von Feintröpfchen beim Sprühvorgang wurde wie in Beispiel 1 durchgeführt. Die Ergebnisse wurden in Tabelle 7 dargestellt.

**Tabelle 7:**

| | | | | | |
|---|---|---|---|---|---|
| Konzentraion Tensid A in Gew.-% | 0 | 1 | 2.5 | 5 | 10 |
| Anteil von Feintröpfchen in % | 14.8 | 9.5 | 9 | 10 | 11.5 |

### Beispiel-6: Kooperativer Effekt von Copolymer (P) und nicht-ionischen Tensiden

Eine wässrige Lösung S11 von Polymer A mit einer Konzentration von 50 ppm enthaltend 2000 ppm von Tensid B wurde hergestellt und die Verminderung des Anteils von Feintröpfchen beim Sprühvorgang wurde wie in Beispiel 1 durchgeführt. Die Ergebnisse wurden in Tabelle 8 dargestellt.

**Tabelle 8:**

| | Wasser | S11 |
|---|---|---|
| Anteil von Feintröpfchen in % | 17 | 14 |

### Beispiel-7: Verminderung des Anteils an Feintröpfchen in SL-Formulierungen

Die wässrigen Lösungsformulierungen SL-1 und SL-2 enthaltend Glyphosat, Dicamba-BAPMA, Tensid C, und Polymer B oder Polymer C, sowie die Vergleichsformulierung SL-1* ohne Polymer, wurden entsprechen den Konzentrationen in Tabelle 9 hergestellt.

**Tabelle 9:**

| Inhaltsstoff | SL-1 | SL-2 | SL-1* |
|---|---|---|---|
| Glyphosat in g/l | 11,2 | 11,2 | 11,2 |
| Dicamba-BAPMA in g/l | 5,6 | 5,6 | 5,6 |
| Polymer A in ppm | 50 | - | - |
| Polymer B in ppm | - | 50 | - |
| Tensid C in g/l | 3 | 3 | 3 |

Die Verminderung des Anteils von Feintröpfchen beim Sprühvorgang wurde wie in Beispiel 1 durchgeführt. Die Ergebnisse wurden in Tabelle 10 dargestellt.

**Tabelle 10:**

| | SL-1 | SL-2 | SL-1* |
|---|---|---|---|
| Anteil von Feintröpfchen in % | 3 | 4 | 9 |

Beispiel-8: Konzentrationsabhängigkeit der Verminderung des Anteils an Feintröpfchen in SL-Formulierungen

Die wässrigen Lösungsformulierungen SL-3, SL-4 und SL-5 enthaltend Glyphosat, Dicamba-BAPMA, und Polymer A, sowie die Vergleichsformulierung SL-2* ohne Polymer, wurden entsprechen den Konzentrationen in Tabelle 11 hergestellt.

**Tabelle 11:**

| Inhaltsstoff | SL-3 | SL-4 | SL-5 | SL-2* |
|---|---|---|---|---|
| Glyphosat in g/l | 11,2 | 11,2 | 11,2 | 11,2 |
| Dicamba-BAPMA in g/l | 5,6 | 5,6 | 5,6 | 5,6 |
| Polymer A in ppm | 50 | 70 | 90 | - |

Die Verminderung des Anteils von Feintröpfchen beim Sprühvorgang wurde wie in Beispiel 1 durchgeführt. Die Ergebnisse wurden in Tabelle 10 dargestellt.

**Tabelle 12:**

| | SL-3 | SL-4 | SL-5 | SL-2* |
|---|---|---|---|---|
| Anteil von Feintröpfchen in % | 6 | 3,8 | 2,1 | 8,3 |

### Beispiel-9: Konzentrationsabhängigkeit der Verminderung des Anteils an Feintröpfchen in Pestizidsuspensionen

Die wässrigen Suspensionen SP-1 bis SP-7, sowie das Vergleichssuspensionskonzentrat SP-1* ohne das erfindungsgemäße Polymer, wurden mit den Inhaltsstoffen entsprechend Tabelle 13 hergestellt. Dazu wurden Wasser, Fungizid A, Tensid D, Hyperverzweigtes Polymer und Entschäumer gemischt. Die Mischung wurde mit einer Kugelmühle bis zu einer Partikelgröße von 2 µm vermahlen. Propylenglycol, Biozid, und Verdicker A wurden zugegeben. Durch Vermischen wurden homogene Suspensionen erhalten. Diese wurden mit Wasser und Polymer A zu den Suspensionen SP-1 bis SP-7, und SP-1* versetzt. Tabelle 13 zeigte die finalen Konzentrationen der Inhaltsstoffe.

**Tabelle 13:**

| Inhaltsstoff | SP-1 | SP-2 | SP-3 | SP-4 | SP-5 | SP-6 | SP-7 | SP-1* |
|---|---|---|---|---|---|---|---|---|
| Fungizid A in g/l | 0,375 | 0,375 | 0,375 | 0,375 | 0,375 | 0,375 | 0,375 | 0,375 |
| Polymer A in in ppm | 35 | 17,5 | 8,75 | 4,5 | 2,2 | 1,1 | 0,5 | - |
| Propylenglycol in g/l | 0,1 | 0,1 | 0,1 | 0,1 | 0,1 | 0,1 | 0,1 | 0,1 |
| Tensid D in ppm | 45 | 45 | 45 | 45 | 45 | 45 | 45 | 45 |
| Hyperverzweigtes Polymer in g/l | 1 | 1 | 1 | 1 | 1 | 1 | 1 | 1 |
| Füllstoff A in ppm | 75 | 75 | 75 | 75 | 75 | 75 | 75 | 75 |
| Verdicker A in ppm | 10 | 10 | 10 | 10 | 10 | 10 | 10 | 10 |
| Biozid in g/l | 2 | 2 | 2 | 2 | 2 | 2 | 2 | 2 |
| Entschäumer in ppm | 25 | 25 | 25 | 25 | 25 | 25 | 25 | 25 |
| Wasser | bis 1 liter | bis 1 liter | bis 1 liter | bis 1 liter | bis 1 liter | bis 1 liter | bis 1 liter | bis 1 liter |

| | | | | | | | | |
|---|---|---|---|---|---|---|---|---|
| *Vergleichsversuch | | | | | | | | |

Die Verminderung des Anteils von Feintröpfchen beim Sprühvorgang wurde wie in Beispiel 1 durchgeführt, jedoch wurde ein Druck von 4 bar beim Versprühen angelegt. Die Ergebnisse wurden in Tabelle 14 dargestellt.

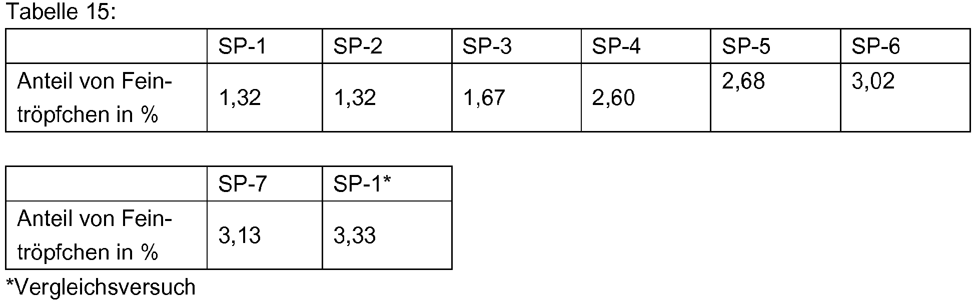

Beispiel-10: Konzentrationsabhängigkeit der Verminderung des Anteils an Feintröpfchen in Emulsionen

Das wässrige Emulsionskonzentrat EC-1 wurde mit den Inhaltsstoffen entsprechend Tabelle 16 hergestellt.

**Tabelle 16:**

| Inhaltsstoff | Herbizid A | Tensid E | Lösungsmittel A |
|---|---|---|---|
| Konzentration in g/l | 720 | 113 | bis 1 Liter |

Danach wurde EC-1 mit 30 Litern Wasser verdünnt und Polymer A hinzugefügt bis zu einer Konzentration von 233 ppm. Die resultierende Spritzbrühe SB-8 wurde bei einem Druck von 4 bar durch eine ID-Düse (Luftinjektionsdüse ID) versprüht. Der Anteil von Feintröpfchen wurde ansonsten wie in Beispiel 1 beschrieben bestimmt. Die Ergebnisse wurden in Tabelle 17 im Vergleich mit Wasser dargestellt.

**Tabelle 17**

| | SB-8 | Wasser |
|---|---|---|
| Anteil von Feintröpfchen in % | 1,48 | 4,3 |

Beispiel-11: Verminderung des Anteils an Feintröpfchen bei Anwesenheit weiterer Monomere Eine wässrige Lösung S12 von Polymer H mit einer Konzentration von 50 ppm wurde hergestellt und die Verminderung des Anteils der Feintröpfchen beim Sprühvorgang wurde wie in Beispiel 1 durchgeführt im Vergleich mit Wasser, oder im Vergleich mit der wässrigen Lösung S1 aus Beispiel 1. Die Ergebnisse wurden in Tabelle 18 dargestellt.

**Tabelle 18**

| | S1 | S12 | Wasser |
|---|---|---|---|
| Normierter Anteil von Feintröpfchen in % | 77 | 69 | 100 |

## Patentansprüche

1. Eine agrochemische Zusammensetzung enthaltend ein Pestizid und mindestens ein wasserlösliches Copolymer (P), wobei das Copolymer (P) mindestens umfasst
(A) 30 bis 99,99 Gew.-% mindestens eines Monomers (A), ausgewählt aus der Gruppe von (Meth)acrylamid, N-Methyl(meth)acrylamid, N,N'-Dimethyl(meth)acrylamid oder N-Methylol(meth)acrylamid;
(B) 0,01 bis 15 Gew.-% mindestens eines Makromonomers (B), mindestens umfassend ein Makromonomer (B1)
(B1) H₂C=C(R¹)-R²-O-(R³O)ₐ-(R⁴O)_{b}-[(R⁴O)_{c}(R⁵O)_{d}]-H;
und
(C) 0,1 bis 69,99 Gew.-% mindestens eines anionischen, monoethylenisch ungesättigten Monomers (C), umfassend mindestens eine saure Gruppe ausgewählt aus - COOH, -SO₃H, PO₃H₂ und deren Salze;
wobei die Reste und Indices die folgende Bedeutung haben:
R¹: H oder Methyl,
R²: eine Einfachbindung oder eine zweiwertige verknüpfende Gruppe -OR³⁵-, wobei R³⁵ für eine Alkylengruppe mit 1 bis 6 Kohlenstoffatomen steht,
R³: unabhängig voneinander Ethylengruppen -CH₂CH₂-, 1,2-Propylengruppen -CH₂-CH(CH₃)-, oder Alkylengruppen R⁴, mit der Maßgabe, dass es sich bei mindestens 90 mol% der Reste R³ um Ethylengruppen handelt,
R⁴: unabhängig voneinander Alkylengruppen -CR⁶(R⁷)-CR⁸(R⁹)-, wobei die Reste R⁶, R⁷, R⁸ und R⁹ unabhängig voneinander für H oder einen linearen oder verzweigten Alkylrest mit 1 bis 8 Kohlenstoffatomen stehen, mit der Maßgabe, dass nicht alle Reste für H stehen und die Summe der Kohlenstoffatome der Reste R⁶, R⁷, R⁸ und R⁹ 2 bis 8 beträgt,
R⁵ eine Ethylengruppe -CH₂CH₂-,
a eine Zahl von 10 bis 150,
b eine Zahl von 5 bis 30,
c eine Zahl von 0 bis 2,
d eine Zahl von 0 bis 20, und
wobei die Mengenangaben der Monomere jeweils auf die Gesamtmenge aller Monomere im Copolymer (P) bezogen sind.

2. Die agrochemische Zusammensetzung gemäß Anspruch 1, wobei der Index d eine Zahl von 1 bis 15 ist.

3. Die agrochemische Zusammensetzung gemäß Anspruch 2, wobei das Copolymer (P) mindestens ein zusätzliches Makromonomer (B2) enthält
(B2) H₂C=C(R¹)-R²-O-(R³O)ₐ-(R⁴O)_{b}-H,
wobei der molare Anteil x der Makromonomere (B1) bezüglich der Summe von (B1) und (B2) 0,1 bis 0,99 beträgt und die Reste und Indices die gleiche Bedeutung haben wie für Formel (B1).

4. Die agrochemische Zusammensetzung gemäß einem der Ansprüche 1 bis 3, wobei der Rest R¹ für H, der Rest R² für OR³⁵, und der Rest R³ für -CH₂CH₂- stehen.

5. Die agrochemische Zusammensetzung gemäß einem der Ansprüche 1 bis 4, wobei der Index a eine Zahl von 20 bis 28, der Index b eine Zahl von 8 bis 20, und der Index d eine Zahl von 2 bis 5 ist.

6. Die agrochemische Zusammensetzung gemäß einem der Ansprüche 1 bis 5, **dadurch gekennzeichnet, dass** 2 oder 3 der Reste R⁶, R⁷, R⁸ und R⁹ für H stehen und die Summe der Kohlenstoffatome der Reste R⁶, R⁷, R⁸ und R⁹ 2 oder 3 beträgt.

7. Die agrochemische Zusammensetzung gemäß einem der Ansprüche 1 bis 6, **dadurch gekennzeichnet, dass** die Summe b+c der Reste R⁴O mit der Maßgabe gewählt wird, dass die Summe aller Kohlenstoffatome aller vorhandenen Reste R⁶, R⁷, R⁸ und R⁹ 25 bis 50 beträgt.

8. Die agrochemische Zusammensetzung gemäß einem der Ansprüche 1 bis 7, wobei das Copolymer (P) mindestens zwei verschiedene Monomere (C) enthält.

9. Die agrochemische Zusammensetzung gemäß einem der Ansprüche 1 bis 8, wobei das Copolymer (P) mindestens ein Monomer (C) der Formel (I) enthält CH
₂=CH₂-C(O)XR¹⁰SO₃H (I),
wobei die Reste die folgende Bedeutung haben
X N oder O; und
R¹⁰ -CH₂-, -CH₂CH₂-, -C(CH₃)₂-, -CHCH₃-, -CH(CH₃)CH₂-, -CH₂CH(CH₃)-, -C(CH₃)₂CH₂-, -CH₂C(CH₃)₂-.

10. Die agrochemische Zusammensetzung gemäß einem der Ansprüche 1 bis 9, wobei das Copolymer (P) mindestens ein Monomer (C) mit einer Gruppe -COOH enthält, bevorzugt (Meth)acrylsäure.

11. Die agrochemische Zusammensetzung gemäß einem der Ansprüche 1 bis 10, wobei das Copolymer (P) ein gewichtsmittlereres Molekulargewicht von mindestens 1000000 g/mol aufweist.

12. Die agrochemische Zusammensetzung gemäß einem der Ansprüche 1 bis 10, wobei das Copolymer (P) ein gewichtsmittleres Molekulargewicht von 100000 bis 600000 g/mol aufweist.

13. Die agrochemische Zusammensetzung gemäß Anspruch 11 oder 12, enthaltend mindestens ein nicht-ionisches Tensid.

14. Die agrochemische Zusammensetzung gemäß Anspruch 13, wobei das nicht-ionische Tensid ein Alkoholalkoxylat oder ein Polyalkylenoxid ist.

15. Ein Verfahren zur Herstellung einer Spritzbrühe enthaltend das Kontaktieren eines Pestizids, eines wasserlöslichen Coplymers (P) wie definiert in einem der Ansprüche 1 bis 12, und Wasser.

16. Verfahren zur Kontrolle phytopathogener Pilze und/oder unerwünschten Pflanzenwachstums und/oder unerwünschten Insekten- oder Milbenbefalls und/oder zur Regulation des Pflanzenwachstums, wobei man die agrochemische Zusammensetzung definiert in einem der Ansprüche 1 bis 12 auf den Schädling, seine Umgebung, die vor dem Schädling zu schützende Nutzpflanze, auf den Boden und/oder die unerwünschte Pflanze und/oder die Nutzpflanze und/oder ihre Umgebung einwirken lässt.

## Claims

1. An agrochemical composition comprising a pesticide and at least one water-soluble copolymer (P), where the copolymer (P) at least comprises
(A) 30 to 99.99 wt% of at least one monomer (A), selected from the group consisting of (meth)acrylamide, N-methyl(meth)acrylamide, N,N'-dimethyl(meth)acrylamide or N-methylol(meth)acrylamide;
(B) 0.01 to 15 wt% of at least one macromonomer (B), at least comprising a macromonomer (B1)
(B1) H₂C=C(R¹)-R²-O-(R³O)ₐ-(R⁴O)_{b}-[(R⁴O)_{c}(R⁵O)_{d}]-H; and
(C) 0.1 to 69.99 wt% of at least one anionic monoethylenically unsaturated monomer (C), comprising at least one acidic group selected from -COOH, -SO₃H, PO₃H₂, and salts thereof;
where the radicals and indices have the following definitions:
R¹: H or methyl,
R²: a single bond or a divalent linking group -OR³⁵-, where R³⁵ is an alkylene group having 1 to 6 carbon atoms,
R³: independently at each occurrence ethylene groups -CH₂CH₂-, 1,2-propylene groups -CH₂-CH(CH₃)-, or alkylene groups R⁴, with the proviso that at least 90 mol% of the radicals R³ are ethylene groups,
R⁴: independently at each occurrence alkylene groups -CR⁶(R⁷)-CR⁸(R⁹)-, where the radicals R⁶, R⁷, R⁸ and R⁹ independently of one another are H or a linear or branched alkyl radical having 1 to 8 carbon atoms, with the proviso that not all the radicals are H and the sum of the carbon atoms in the radicals R⁶, R⁷, R⁸ and R⁹ is 2 to 8,
R⁵: an ethylene group -CH₂CH₂-,
a is a number from 10 to 150,
b is a number from 5 to 30,
c is a number from 0 to 2,
d is a number from 0 to 20, and
where the quantity figures of the monomers are based in each case on the total amount of all the monomers in the copolymer (P).

2. The agrochemical composition according to claim 1, where the index d is a number from 1 to 15.

3. The agrochemical composition according to claim 2, where the copolymer (P) comprises at least one additional macromonomer (B2)
(B2) H₂C=C(R¹)-R²-O-(R³O)ₐ-(R⁴O)_{b}-H,
where the molar fraction x of the macromonomers (B1) relative to the sum of (B1) and (B2) is 0.1 to 0.99 and the radicals and indices have the same definitions as for formula (B1).

4. The agrochemical composition according to any of claims 1 to 3, where the radical R¹ is H, the radical R² is OR³⁵, and the radical R³ is -CH₂CH₂-.

5. The agrochemical composition according to any of claims 1 to 4, where the index a is a number from 20 to 28, the index b is a number from 8 to 20, and the index d is a number from 2 to 5.

6. The agrochemical composition according to any of claims 1 to 5, wherein 2 or 3 of the radicals R⁶, R⁷, R⁸ and R⁹ are H and the sum of the carbon atoms in the radicals R⁶, R⁷, R⁸ and R⁹ is 2 or 3.

7. The agrochemical composition according to any of claims 1 to 6, wherein the sum b+c in the radicals R⁴O is selected with the proviso that the sum of all the carbon atoms of all the radicals R⁶, R⁷, R⁸ and R⁹ present is 25 to 50.

8. The agrochemical composition according to any of claims 1 to 7, where the copolymer (P) comprises at least two different monomers (C).

9. The agrochemical composition according to any of claims 1 to 8, where the copolymer (P) comprises at least one monomer (C) of the formula (I) CH
₂=CH₂-C(O)XR¹⁰SO₃H (I),
where the radicals have the following definitions:
X N or O; and
R¹⁰ -CH₂-, -CH₂CH₂-, -C(CH₃)₂-, -CHCH₃-, -CH(CH₃)CH₂-, -CH₂CH(CH₃) -, -C(CH₃)₂CH₂-,-CH₂C(CH₃)₂-.

10. The agrochemical composition according to any of claims 1 to 9, where the copolymer (P) comprises at least one monomer (C) having a -COOH group, preferably (meth)acrylic acid.

11. The agrochemical composition according to any of claims 1 to 10, where the copolymer (P) has a weight-average molecular weight of at least 1 000 000 g/mol.

12. The agrochemical composition according to any of claims 1 to 10, where the copolymer (P) has a weight-average molecular weight of 100 000 to 600 000 g/mol.

13. The agrochemical composition according to claim 11 or 12, comprising at least one nonionic surfactant.

14. The agrochemical composition according to claim 13, where the nonionic surfactant is an alcohol alkoxylate or a polyalkylene oxide.

15. A method for producing a spray mixture, comprising contacting a pesticide, a water-soluble copolymer (P) as defined in any of claims 1 to 12, and water.

16. A method for controlling phytopathogenic fungi and/or unwanted plant growth and/or unwanted insect infestation or mite infestation and/or for regulating plant growth, where the agrochemical composition defined in any of claims 1 to 12 is caused to act on the pest, its environment, the crop plant to be protected from the pest, on the soil and/or the unwanted plant and/or the crop plant and/or its environment.

## Revendications

1. Composition agrochimique contenant un pesticide et au moins un copolymère (P) soluble dans l'eau, le copolymère (P) comprenant au moins
(A) 30 à 99,99% en poids d'au moins un monomère (A), choisi dans le groupe formé par le (méth)acrylamide, le N-méthyl(méth)acrylamide, le N,N'-diméthyl(méth)acrylamide ou le N-méthylol(méth)acrylamide ;
(B) 0,01 à 15% en poids d'au moins un macromonomère (B), comprenant au moins un macromonomère (B1) (B1) H₂C=C(R¹)-R²-O-(R³O)ₐ-(R⁴O)_{b}-[(R⁴O)_{c}(R⁵P)_{d}]-H ; et
(C) 0,1 à 69,99% en poids d'au moins un monomère anionique, éthyléniquement monoinsaturé (C), comprenant au moins un groupe acide choisi parmi -COOH, -SO₃H, PO₃H₂ et leurs sels ;
les radicaux et les indices présentant la signification suivante :
R¹ : H ou méthyle,
R² : une simple liaison ou un groupe de liaison divalent -OR³⁵-, R³⁵ représentant un groupe alkylène comprenant 1 à 6 atomes de carbone,
R³ : indépendamment les uns des autres, des groupes éthylène -CH₂CH₂-, des groupes 1,2-propylène -CH₂-CH(CH₃)- ou des groupes alkylène R⁴, étant entendu qu'il s'agit, pour au moins 90% en mole des radicaux R³, de groupes éthylène,
R⁴ : indépendamment les uns des autres, des groupes alkylène -CR⁶ (R⁷)-CR⁸(R⁹)-, les radicaux R⁶, R⁷, R⁸ et R⁹ représentant, indépendamment les uns des autres, H ou un radical alkyle linéaire ou ramifié comprenant 1 à 8 atomes de carbone, étant entendu que tous les radicaux ne représentent pas H et que la somme des atomes de carbone des radicaux R⁶, R⁷, R⁸ et R⁹ vaut 2 à 8,
R⁵ un groupe éthylène -CH₂CH₂-,
a un nombre de 10 à 150,
b un nombre de 5 à 30,
c un nombre de 0 à 2,
d un nombre de 0 à 20 et
les indications de quantités des monomères se rapportant à chaque fois à la quantité totale de tous les monomères dans le copolymère (P).

2. Composition agrochimique selon la revendication 1, l'indice d représentant un nombre de 1 à 15.

3. Composition agrochimique selon la revendication 2, le copolymère (P) contenant au moins un macromonomère supplémentaire (B2)
(B2) H₂C=C(R¹)-R²-O-(R³O)ₐ-(R⁴O)_{b}-H,
la proportion molaire x des macromonomères (B1), par rapport à la somme de (B1) et (B2), valant 0,1 à 0,99 et les radicaux et les indices ayant la même signification que pour la formule (B1).

4. Composition agrochimique selon l'une quelconque des revendications 1 à 3, le radical R¹ représentant H, le radical R² représentant OR³⁵ et le radical R³ représentant -CH₂CH₂-.

5. Composition agrochimique selon l'une quelconque des revendications 1 à 4, l'indice a représentant un nombre de 20 à 28, l'indice b représentant un nombre de 8 à 20 et l'indice d représentant un nombre de 2 à 5.

6. Composition agrochimique selon l'une quelconque des revendications 1 à 5, **caractérisée en ce que** 2 ou 3 des radicaux R⁶, R⁷, R⁸ et R⁹ représentent H et la somme des atomes de carbone des radicaux R⁶, R⁷, R⁸ et R⁹ vaut 2 ou 3.

7. Composition agrochimique selon l'une quelconque des revendications 1 à 6, **caractérisée en ce que** la somme b + c des radicaux R⁴O est choisie étant entendu que la somme de tous les atomes de carbone de tous les radicaux R⁶, R⁷, R⁸ et R⁹ présents vaut 25 à 50.

8. Composition agrochimique selon l'une quelconque des revendications 1 à 7, le copolymère (P) contenant au moins deux macromonomères (C) différents.

9. Composition agrochimique selon l'une quelconque des revendications 1 à 8, le copolymère (P) contenant au moins un monomère (C) de formule (I)
CH₂=CH₂-C(O)XR¹⁰SO₃H (I),
les radicaux présentant la signification suivante
X N ou O ; et
R¹⁰ -CH₂-, -CH₂CH₂-, -C(CH₃)₂-, -CHCH₃-, -CH(CH₃)CH₂-, -CH₂CH(CH₃)-, -C(CH₃)₂CH₂-, -CH₂C(CH₃)₂-.

10. Composition agrochimique selon l'une quelconque des revendications 1 à 9, le copolymère (P) contenant au moins un monomère (C) présentant un groupe -COOH, de préférence l'acide (méth)acrylique.

11. Composition agrochimique selon l'une quelconque des revendications 1 à 10, le copolymère (P) présentant un poids moléculaire moyen en poids d'au moins 1.000.000 g/mole.

12. Composition agrochimique selon l'une quelconque des revendications 1 à 10, le copolymère (P) présentant un poids moléculaire moyen en poids d'au moins 100.000 à 600.000 g/mole.

13. Composition agrochimique selon la revendication 11 ou 12, contenant au moins un tensioactif non ionique.

14. Composition agrochimique selon la revendication 13, le tensioactif non ionique étant un alcoxylate d'alcool ou un poly(oxyde d'alkylène).

15. Procédé pour la préparation d'un bouillon de pulvérisation, contenant la mise en contact d'un pesticide, d'un copolymère (P) soluble dans l'eau tel que défini dans l'une quelconque des revendications 1 à 12 et de l'eau.

16. Procédé pour lutter contre des champignons phytopathogènes et/ou une croissance non souhaitée de plantes et/ou une attaque non souhaitée par des insectes ou des acariens et/ou pour la régulation de la croissance de plantes, dans lequel on laisse agir la composition agrochimique définie dans l'une quelconque des revendications 1 à 12 sur l'organisme nuisible, sur son environnement, sur les plantes cultivées à protéger contre l'organisme nuisible, sur le sol et/ou sur les plantes non souhaitées et/ou sur les plantes cultivées et/ou sur leur environnement.
